# EUROPÄISCHE PATENTSCHRIFT

(11) **EP 4 259 467 B1**
(45) Veröffentlichungstag und Bekanntmachung des Hinweises auf die Patenterteilung: **09.04.2025**
(21) Anmeldenummer: 21802697.9
(22) Anmeldetag: 02.11.2021
(51) Int. Cl.: B60K 35/10, G06F 3/038, G06F 3/041, G06F 3/0481, G06F 3/0488, B60K 35/29

(54) **VERFAHREN UND VORRICHTUNG ZUM INVOLVIERUNGSABHÄNGIGEN DYNAMISCHEN SPERREN EINER BEDIENEINRICHTUNG**
METHOD AND APPARATUS FOR INVOLVEMENT-DEPENDENT DYNAMIC BLOCKING OF AN OPERATING DEVICE
PROCÉDÉ ET APPAREIL POUR LE BLOCAGE DYNAMIQUE DÉPENDANT DE L'IMPLICATION D'UN DISPOSITIF D'EXPLOITATION

(30) Priorität: 08.12.2020 DE 102020215460
(43) Veröffentlichungstag der Anmeldung: 18.10.2023
(73) Patentinhaber: VOLKSWAGEN AKTIENGESELLSCHAFT, 38440 Wolfsburg (DE)
(72) Erfinder: BAUMGARTEN, Thorb, 38448 Wolfsburg (DE); GROSS, Alice, 12049 Berlin (DE); WERNER, Thomas, 17217 Penzlin (DE); HALLER, Eric, 15370 Fredersdorf (DE); KOHL, Julia, 13595 Berlin (DE)
(86) Internationale Anmeldenummer: PCT/EP2021/080348
(87) Internationale Veröffentlichungsnummer: WO 2022/122253

(56) Entgegenhaltungen:
- DE-A1- 102011 080 624
- DE-A1- 102013 211 721

## Beschreibung

Die Erfindung betrifft ein Verfahren und eine Vorrichtung zum Sperren von Anzeige- und/oder Bedienkontexten in einem Fahrzeug aufgrund zu starker Ablenkung des Fahrers vom Fahrgeschehen.

Moderne Fahrzeuge weisen eine Vielzahl von Assistenz- und Komfortsystemen auf, deren Funktionen teilweise eine vielschrittige Bedienung erfordern. Es hat sich gezeigt, dass hierbei die Gefahr besteht, dass der Fahrer beim Bedienen komplexer Funktionalitäten, die eine große Anzahl von Bedienschritten erfordern, zu lange vom Fahrgeschehen abgelenkt wird, sodass ein sicheres Führen des Fahrzeugs nicht immer gewährleistet ist. Insbesondere erfordern komplexe vielschrittige Eingabehandlungen häufig eine Blickabwendung vom Verkehrsgeschehen.

Darüber hinaus sind einzelne Komfortinhalte, beispielsweise ein Anzeigen von Fernseh- oder Videobildern, während des Fahrens grundsätzlich blockiert, da deren Betrachtung eine Ablenkung vom Verkehrsgeschehen mit sich bringt, welche nicht akzeptabel ist.

Aus der US 2005/0038573 A1 ist ein Fahrzeuginformations- und Aufgabenmanager bekannt, der mindestens eine Infotainmentvorrichtung unter bestimmten Bedingungen abhängig von der aktuellen Fahrumgebung des Nutzers sperrt. Bestimmten erkannten Bedingungen während des Fahrens sind über eine gewichtete Matrix Risiken zugeordnet. Einer geänderten Bedingung wird ein Gewicht zugeordnet und die gewichteten Risiken summiert, um eine Risikoniveauinformation zu berechnen. Die Risikoniveauinformation wird danach mit einer Prioritätsniveauinformation verglichen, die mit der mindestens einen Infotainmentvorrichtung assoziiert ist. Wenn die Risikoniveauinformation gleich oder größer als die Prioritätsniveauinformation der mindestens einen Infotainmentvorrichtung ist, wird die Infotainmentvorrichtung zeitweise gesperrt, bis sich die Fahrumgebung geändert hat, sodass eine Bedingung eingetreten ist, in der ein Bedienen der Infotainmentvorrichtung sicher ist.

Die DE 10 2011 080 624 A1 beschreibt mehrere Systeme und Verfahren zur Regulierung der Bedienung eines Fahrzeuginfotainmentsystems. Bei einer Ausführungsform schließt ein Fahrzeugcomputersystem eine Benutzerschnittstelle ein, die eine oder mehrere Ausgabekomponenten und eine oder mehrere Eingabekomponenten aufweist. Software, die im Speicher des Fahrzeugcomputersystems ausgeführt wird, kann mit Regeln programmiert werden, welche die Ablenkung des Fahrers reduzieren, wie beispielsweise das Verhindern von Eingaben oder Ausgaben während des Fahrbetriebs. Eingaben von der einen oder den mehreren Eingabekomponenten der Benutzerschnittstelle können unterbrochen werden. Zusätzlich oder alternativ können Ausgaben zu den Ausgabekomponenten der Benutzerschnittstelle unterbrochen sein. Die unterbrochenen Eingaben oder Ausgaben können für eine oder mehrere auf den Regeln basierende Verletzungen bewertet werden. Wenn der eine oder die mehreren Verletzungen erkannt werden, können die Eingaben oder Ausgaben während des Fahrbetriebs verhindert werden.

Die DE 10 2013 211 721 A1 beschreibt Verfahren und Fahrzeuge zur Bereitstellung einer haptischen Rückmeldung an einen Fahrzeuginsassen. In einer Ausführungsform umfasst das Verfahren ein Einschätzen bzw. Evaluieren von auf das Fahrzeug bezogenen Zuständen, ein Auswählen einer Art von haptischer Warnung bzw. Warnen auf Basis der evaluierten Zustände, ein Auswählen eines Musters haptischer Aktuatoren, um auf Basis der Art der haptischen Warnung und eines Ortes der haptischen Aktuatoren in einem Sitz des Fahrzeuges, ein Auswählen einer Anzahl aktiver haptischer Perioden, um auf Basis der Art der haptischen Warnung diese Perioden zu steuern, ein Auswählen einer zeitlichen Dauer der aktiven haptischen Perioden und eine zeitliche Dauer inaktiver haptischer Perioden auf Basis der Art der haptischen Warnung, und Erzeugen eines Signales, welches die aktiven haptischen Perioden auf Basis des ausgewählten Musters der haptischen Aktuatoren anzeigt, die ausgewählte Anzahl aktiver haptischer Perioden und die ausgewählte zeitliche Dauer der aktiven und inaktiven haptischen Perioden.

Aus der US 9,485,097 B2 ist ein Fahrerevaluierungssystem für ein Fahrzeug bekannt, welches einen Parameter zum Darstellen eines Fahreraufmerksamkeitsniveaus bezüglich des Führens des Fahrzeugs während eines zeitlichen Abschnitts erzeugt, der basierend auf einem Komplement eines gewichteten Durchschnitts einer Vielzahl von Zählimpulsen gebildet wird. Einige der Zählimpulse repräsentieren eine Anzahl von Interaktionsereignissen zwischen dem Fahrer und einem Infotainmentsystem in dem Fahrzeug während des Zeitabschnitts. Der ermittelte Parameter stellt die Aufmerksamkeit des Fahrers während des zeitlichen Abschnitts dar und kann grafisch gegen die Zeit aufgetragen werden.

Darüber hinaus ist es bekannt, in Fahrzeugen bestimmte Funktionen, die eine vielschrittige Bedienung erfordern, wie beispielsweise die Eingabe einer Adresse über eine Buchstabenauswahl der Buchstaben eines Straßennamens für ein Navigationsziel, grundsätzlich zu sperren. Dieses führt jedoch zu unbefriedigenden Einschränkungen und ermöglicht es nicht, adäquat auf Bediensituationen einzugehen, in denen beispielsweise mehrere Funktionen zeitlich nacheinander bedient werden oder nachträglich in Fahrzeugkomponenten integriert werden.

Der Erfindung liegt somit die technische Aufgabe zugrunde, eine verbesserte Vorrichtung und ein verbessertes Verfahren zu schaffen, bei denen mindestens eine Bedieneinrichtung eine möglichst große Flexibilität bei der Bedienung und zugleich eine ausreichend hohe Sicherheit beim Führen des Fahrzeugs durch den Fahrer gewährleistet.

Die Erfindung wird durch eine Vorrichtung mit den Merkmalen des Patentanspruchs 1 sowie ein Verfahren mit den Merkmalen des Patentanspruchs 13 gelöst. Vorteilhafte Weiterbildungen der Erfindung ergeben sich aus den Unteransprüchen.

Der Erfindung liegt die Idee zugrunde, Funktionen und Funktionalitäten nicht grundsätzlich von vornherein zu sperren, sondern abhängig von der tatsächlichen Nutzerinteraktion die Sperrung dynamisch während der Nutzung der mindestens einen Bedieneinrichtung vorzunehmen. Hierdurch wird erreicht, dass unabhängig von der konkreten Funktion, welche bedient werden soll, oder auch einer Bedienung einer Abfolge von verschiedenen Funktionen eine Sperrung der mindestens einen Bedieneinrichtung eintritt, wenn eine zu hohe Ablenkung des Fahrers vom Fahrgeschehen zu befürchten ist und zugleich eine Bedienung von Funktionen möglich ist, die im konkreten Fall nur eine geringe Anzahl von Bedienschritten benötigen, welche ein Fahrer in einer angemessenen Zeit und mit einer angemessenen Bedienschrittzahl und Bedienkomplexität ausführen kann, ohne dass dies für das Führen des Fahrzeugs im Hinblick auf die Fahrsicherheit unakzeptabel ist.

Die Erfindung bietet den Vorteil, dass ein Blockierzustand dynamisch abhängig von dem Involvierungswert, d.h. der Involvierung des Fahrers in eine Bedienung, herbeigeführt wird, indem ein weiteres Bedienen der mindestens einen Bedieneinrichtung eingeschränkt oder vollständig gesperrt wird. Eine Einschränkung der Bedienung ist dann erforderlich, wenn bestimmte Funktionalitäten, welche für das sichere Führen des Fahrzeugs notwendig sind, nach wie vor bedienbar sein sollen. Ansonsten wird in der Regel die gesamte Bedienung mit der mindestens einen Bedieneinrichtung gesperrt, wenn der Blockierzustand erreicht ist.

Um z.B. zu erreichen, dass für eine Mindestdauer keine weitere Bedienung erfolgt, wird bei einigen Ausführungsformen das Bedienen der mindestens einen Bedieneinrichtung erst wieder zugelassen, wenn der aktuelle Involvierungswert auf oder unter einen Freigabeschwellenwert gesunken ist. Dieses tritt aufgrund des fortwährenden Erniedrigens des aktuellen Involvierungswerts mit der Zeit ein.

Grundsätzlich gilt für alle Entscheidungen in der vorliegenden Beschreibung, bei denen zwischen zwei Zuständen oder konditionalen Bedingungen abhängig von dem Erreichen oder Überschreiten bzw. Erreichen oder Unterschreiten eines Wertes unterschieden wird, dass das Erreichen des Wertes entweder dem einen oder dem anderen Zustand bzw. der einen konditionalen Bedingung oder der anderen zugeordnet werden kann. Dieses ist in keinem Fall entscheidend für die Verwirklichung der Erfindung. Es ist lediglich wichtig, dass das Erreichen des Wertes nur dem einen Zustand bzw. der einen konditionalen Bedingung zugeordnet ist. Dementsprechend kann in den Blockierzustand auch erst gewechselt werden, wenn der aktuelle Involvierungswert den Unterbrechungsschwellenwert überschreitet. Entsprechend wird dann bei vorteilhaften Ausführungsformen beispielsweise auch der Blockierzustand erst beendet, wenn der aktuelle Involvierungswert den Freigabeschwellenwert unterschreitet.

Somit ist bei einer bevorzugten Ausführungsform die Auswerteeinrichtung ausgebildet, den Blockierzustand zu beenden, wenn der aktuelle Involvierungswert einen Freigabeschwellenwert unterschreitet oder alternativ den Freigabeschwellenwert erreicht oder unterschreitet.

Damit der Involvierungswert möglichst gut die Involvierung des Fahrers bei der Nutzerinteraktion widerspiegelt und ein gutes Maß für die Ablenkung vom Führen des Fahrzeugs darstellt, hat es sich als vorteilhaft herausgestellt, die verschiedenen Nutzerinterkationen anhand möglichst einfacher Kriterien für den Involvierungswert zu bewerten.

Erfinungsgemäß ist vorgesehen, den räumlichen Abstand der Positionen, an denen die Nutzerinteraktionen zeitlich unmittelbar aufeinanderfolgend ausgeführt werden, insbesondere begonnen werden, und die zeitlichen Abstände zwischen diesen Nutzerinteraktionen, insbesondere zwischen den Beginnen dieser Nutzerinteraktionen, auszuwerten. Bei einer Weiterbildung der Erfindung ist vorgesehen, dass die mindestens eine Bedieneinrichtung ausgebildet ist, die Benutzerinteraktion positionsaufgelöst und zeitaufgelöst zu erfassen, und die Auswerteeinrichtung ausgebildet ist, den aktuellen Involvierungswert abhängig vom räumlichen Abstand der Positionen und einem zeitlichen Abstand jeweils aufeinander folgender Nutzerinteraktionen zu erhöhen.

Das positionsabhängige Erfassen bedeutet, dass die Position, an der der Nutzer die Eingabe tätigt, erfasst wird. Bei einer Bedieneinrichtung mit einem Tastenfeld ist dies beispielsweise die Position der beim Betätigen niedergedrückten Taste. Bei einer Bedieneinrichtung, die beispielsweise als Touchscreen ausgebildet ist, ist die Position die Berührposition, an der die Nutzerinteraktion begonnen wird.

Ein zeitaufgelöstes Erfassen bedeutet, dass bei einer Nutzerinteraktion zusätzlich zu der Position auch der Zeitpunkt erfasst wird, zu dem die Nutzerinteraktion vorgenommen wird, oder zumindest ein zeitlicher Abstand zu einer vorausgehenden Betätigung erfasst wird. Dieses muss keine Zeit im Sinne der Uhrzeit sein, sondern kann vielmehr auch anhand eines Taktes ermittelt werden. Beispielsweise kann der Wert eines von einem oszillierenden Signal getrieben Zählregisters genutzt werden oder die Taktzyklen zwischen zwei Beginnzeitpunkten von Nutzerinteraktionen gezählt werden. Zusätzlich wird vorteilhafterweise auch eine Nutzerinteraktionsdauer oder Betätigungsdauer beim Erfassen ermittelt.

Um jedoch nicht eine zu komplexe Bewertung der Nutzerinteraktionen zu erhalten, ist vorzugsweise vorgesehen, alle Nutzerinteraktionen, die nicht in einem Nahbereich der unmittelbar zeitlich vorangehenden Nutzerinteraktion und in zeitlich kurzem Abstand zu der vorausgehenden Nutzerinteraktion ausgeführt werden, einheitlich als Distanz-Nutzerinteraktionen betrachtet und bewertet werden. Hiervon werden Nutzerinteraktionen unterschieden, die in zeitlichem und räumlichem Zusammenhang nacheinander ausgeführt werden. So ist bei einer Doppelbetätigung eine Bedienelements oder bei einem doppelten Berühren ein und desselben Orts auf einem Touchscreen, jeweils die zweite Nutzerinteraktion weniger Aufwendig als die erste oder eine einzelne zeitlich oder räumlich beabstandet zur vorherigen Nutzerinteraktion ausgeführte Nutzerinteraktion. Erfindungsgemäß ist daher vorgesehen, dass die Auswerteeinrichtung ausgebildet ist, den aktuellen Involvierungswert bei jedem Erfassen eines Betätigungsbeginns um einen konstanten Distanzbetätigungswert zu erhöhen, wenn der räumliche Abstand der Position, an der der Betätigungsbeginn der Nutzerinteraktion erfasst ist, von der Position, an der der Betätigungsbeginn der zeitlich vorausgehend erfassten Nutzerinteraktion erfasst ist, einen Nahbereichsschwellen Wert erreicht oder überschreitet oder wenn eine Zeitspanne zwischen dem Erfassen des Betätigungsbeginns und dem Erfassen eines zeitlich unmittelbar vorausgehenden Betätigungsbeginns eine Lokalbetätigungszeitspanne erreicht oder überschreitet, und den aktuellen Involvierungswert bei jedem erfassten Betätigungsbeginn um einen konstanten Lokalbetätigungswert zu erhöhen, wenn der räumliche Abstand der Position, an der der Betätigungsbeginn der Nutzerinteraktion erfasst ist, von der Position, an der der Betätigungsbeginn der zeitlich vorausgehend erfassten Nutzerinteraktion erfasst ist, einen Nahbereichsschwellenwert unterschreitet und zusätzlich eine Zeitspanne zwischen dem Erfassen des Betätigungsbeginns und dem Erfassen des zeitlich unmittelbar vorausgehenden Betätigungsbeginns eine Lokalbetätigungszeitspanne unterschreitet, wobei der Lokalbetätigungswert betragsmäßig kleiner als der Distanzbetätigungswert ist.

Grundsätzlich wird somit jede Nutzerinteraktion gleich bewertet. Jedoch werden einzelne Interaktionen, deren Betätigungspositionen in einem Nahbereich einer unmittelbar zeitlich vorausgegangenen Nutzerinteraktion liegen und zusätzlich in kurzer Abfolge auf eine unmittelbar zeitlich vorausgegangene Nutzerinteraktion erfolgt sind, leicht geringer bewertet, da eine solche Doppel- oder Mehrfachbetätigung einen Nutzer weniger ablenken als zwei oder mehr Betätigungen, bei denen das Betätigungselement, insbesondere ein Finger, durch den Nutzer neu positioniert werden muss.

Auch eine Betätigungsdauer einer Nutzerinteraktion hat einen Einfluss darauf, wie stark ein Fahrer vom Fahrgeschehen abgelenkt wird. Dieses gilt insbesondere, wenn eine Dauer der Nutzerinteraktion einen Schwellenwert, der hier als Kurzzeitbetätigungsschwellenwert bezeichnet ist. Dieser Kurzzeitbetätigungsschwellenwert ist mit einer Kurzzeitbetätigungszeitspanne korreliert. Eine Ausführungsform der Erfindung sieht vor, dass die Auswerteeinrichtung ausgebildet ist, beim Erfassen eines Betätigungsendes einer Nutzerinteraktion den aktuellen Involvierungswert um einen Betätigungsdauerinvolvierungswert zu erhöhen, wenn eine Betätigungsdauer der Nutzerinteraktion eine Kurzeitbetätigungsschwellenwert den erreicht oder überschritten hat.

Grundsätzlich werden somit Nutzerinterkationen, die länger dauern als beispielsweise eine kurze Berührung von einigen 100 Millisekunden oder in einer anderen Ausführungsform länger dauern als 1 Sekunde als Interaktionen gewertet, die ein höheres Involvierungsniveau des Nutzers während der Nutzerinteraktion anzeigen.

Eine besonders bevorzugte Ausführungsform sieht vor, dass der Betätigungsdauerinvolvierungswert variable ist und vorzugsweise gleich einem Minimum von einerseits einem Produkt einer Differenz der Betätigungsdauer und der Kurzeitbetätigungszeitspanne und einem Betätigungsdauergewichtungsfaktor und andererseits einem Betätigungsdauerinvolvierungsmaximalwert ist.

Nutzerinteraktionen, die eine längere Betätigungsdauer aufweisen, werden somit als stärker ablenkende Betätigungen und Nutzerinteraktionen registriert, sehr lang andauernde Betätigungen jedoch auch nicht überbewertet.

Es hat sich jedoch gezeigt, dass neben der reinen Anzahl an Betätigungen sowie der Positionen der Betätigungen bzw. der Abstände zwischen den Betätigungsorten und der Betätigungsdauer auch die zeitliche Abfolge von Nutzerinteraktionen Informationen liefern, die charakteristisch für bestimmte Ablenkungen des Fahrers sind. Daher ist bei einer bevorzugten Ausführungsform vorgesehen, dass die Auswerteeinrichtung mindestens eine Zustandsmaschine aufweist, die eine Interaktionsabfolge der Nutzerinteraktionen auswertet und ausgebildet ist, anhand der Auswertung der Nutzerinteraktionsabfolge einen gesteigerten Involvierungszustand oder einen normalen Involvierungszustand zu erkennen, wobei die Auswerteeinrichtung ausgebildet ist, den aktuellen Involvierungswert auf oder über den Unterbrechungsschwellenwert zu setzen, wenn der gesteigerte Involvierungszustand erkannt ist.

Eine solche Zustandsmaschine kann somit zwischen einem normalen Involvierungszustand und einem gesteigerten Involvierungszustand wechseln, wobei der gesteigerte Involvierungszustand dazu führt, dass der aktuelle Involvierungswert soweit angehoben wird, dass dieser den Unterbrechungsschwellenwert erreicht oder überschreitet, was dazu führt, dass der Blockierzustand der Vorrichtung herbeigeführt wird.

Bei einer besonders bevorzugten Ausführungsform werden die Nutzerinteraktionen, die jeweils innerhalb einer Interaktionsabfolge zum einen daraufhin untersucht, ob die zeitlich aufeinanderfolgenden Interaktionen länger als eine Interaktionsüberwachungszeitspanne sind. Ferner wird ausgewertet, ob zwischen den zeitlich aufeinanderfolgenden Beginnen der erfassten Nutzerinteraktionen die Zeitdifferenzen kürzer als eine Interaktionsintervallzeitspanne sind. Wird eine Gruppe von Betätigungsbeginnen in der Nutzerinteraktionsabfolge gefunden, die diese beiden Kriterien erfüllen, so wechselt die Zustandsmaschine, denen die entsprechende Interaktionsüberwachungszeitspanne und die Interaktionsintervallzeitspanne zugeordnet sind, in den gesteigerten Involvierungszustand. Eine bevorzugte Ausführungsform sieht daher vor, dass der mindestens einen Zustandsmaschine eine Interaktionsüberwachungszeitspanne und eine Interaktionsintervallzeitspanne zugeordnet ist, und beim Erkennen einer Nutzerinteraktionsabfolge in den gesteigerten Involvierungszustand wechselt, die eine Gruppe zeitlich aufeinander folgender erfasster Betätigungsbeginne umfasst, bei denen die Zeitabstände zwischen den unmittelbar aufeinanderfolgend erfassten Betätigungsbeginnen der Gruppe alle kürzer als (oder gleich) der Interaktionsintervallzeitspanne sind, und zugleich diese Betätigungsbeginne der Gruppe in der Nutzerinteraktionsabfolge einen Zeitraum überspannen, der größer oder gleich der Interaktionsüberwachungszeitspane ist.

Es hat sich darüber hinaus gezeigt, dass eine Involvierung des Fahrers in die Bedienung der mindestens einen Bedieneinrichtung bei unterschiedlichen Nutzerinteraktionenabfolgen so hoch sein kann, dass dieses für ein sicheres Führen des Fahrzeugs nicht dienlich ist. Daher ist bei einer bevorzugten Ausführungsform vorgesehen, dass neben der mindestens einen Zustandsmaschine mindestens eine weitere Zustandsmaschine vorhanden ist.

Bei einer bevorzugten Weiterbildung ist daher vorgesehen, dass die Auswerteeinrichtung zusätzlich zu der mindestens einen Zustandsmaschine mindestens eine weitere Zustandsmaschine umfasst, die die Nutzerinteraktionsabfolge auswertet und die ausgebildet ist, ebenfalls einen gesteigerten Involvierungszustand oder einen normalen Involvierungszustand zu erkennen, und die Auswerteeinrichtung den aktuellen Involvierungswert auf oder über den Unterbrechungsschwellenwert setzt, wenn die mindesten eine weitere Zustandsmaschine in den gesteigerten Involvierungszustand wechselt, wobei der mindestens einen weiteren Zustandsmaschine eine weitere Interaktionsüberwachungszeitspanne und eine weitere Interaktionsintervallzeitspanne zugeordnet sind, und beim Erkennen einer Nutzerinteraktionsabfolge in den gesteigerten Involvierungszustand wechselt, die eine weitere Gruppe zeitlich aufeinander folgender erfasster Betätigungsbeginne, bei denen die Zeitabstände zwischen den unmittelbar aufeinanderfolgend erfassten Betätigungsbeginnen der weiteren Gruppe alle kürzer als (oder gleich) der weiteren Interaktionsintervallzeitspanne sind, und zugleich diese Betätigungsbeginne der weiteren Gruppe in der Nutzerinteraktionsabfolge einen Zeitraum überspannen, der größer oder gleich der weiteren Interaktionsüberwachungszeitspane ist.

Während bei der bevorzugten Weiterbildung die eine Zustandsmaschine auf Interaktionsabfolgen reagiert, die in kurzem zeitlichem Abstand Betätigungsbeginne aufweisen, die über die der mindestens einen Zustandsmaschine zugeordnete Interaktionsüberwachungszeitspanne hinaus andauern und bei denen zwischen den einzelnen Interaktionsbeginnen die Zeitabstände jeweils kürzer als die Interaktionsintervallzeitspanne sind, die der mindestens einen Zustandsmaschine zugeordnet sind. Die mindestens eine weitere Zustandsmaschine stellt eine hohe Involvierung des Fahrers in die Bedienung hingegen fest, wenn über einen längeren Zeitraum, der die weitere Interaktionsüberwachungszeitspanne überspannt, immer wieder Nutzerinteraktionen stattfinden, deren Betätigungsbeginne zeitlich voneinander kürzer beabstandet sind als die weitere Interaktionsintervallzeitspanne. Hierbei sind die weitere Interaktionsüberwachungszeitspanne länger als die Interaktionsüberwachungszeitspanne und die weitere Interaktionsintervallzeitspanne größer als die Interaktionsintervallzeitspanne, die der mindestens einen Zustandsmaschine zugeordnet ist. Diese in größeren Abständen jedoch und über einen längeren Zeitraum erfolgenden kontinuierlichen Betätigungen, die keine Unterbrechung der Betätigung aufweisen, die länger als die weitere Interaktionsintervallzeitspanne ist, erfassen beispielsweise Nutzerinteraktionsfolgen, bei denen nacheinander mehrere einen oder mehrere Bedienschritte erfordernde Funktionen oder Fahrzeugeinrichtungen bedient werden. Hierdurch kann sowohl verhindert werden, dass ein Fahrer versucht, den Blockierzustand zu vermeiden, indem er in sehr kurzer Abfolge eine sehr hohe Anzahl von Nutzerinteraktionen auszuführen, als auch solche Bedienungen vermieden werden, bei denen bewusst langsam, jedoch kontinuierlich die mindestens eine Bedieneinrichtung verwendet wird. Beide Bedienstrategien führen aufgrund des Wechsels einer der beiden Zustandsmaschinen in den erhöhten Involvierungszustand, entweder der mindestens einen Zustandsmaschine oder der mindestens einen weiteren Zustandsmaschine, zum Auslösen des Blockierzustands, da jeweils der aktuelle Involvierungswert auf oder über den Unterbrechungsschwellenwert gesetzt wird, wenn eine der Zustandsmaschinen den gesteigerten Involvierungszustand annimmt.

Welche Bedienung bzw. Nutzerinteraktionen ein Nutzer ausführen kann, ohne dass sich dieses nachteilig auf das Führen des Fahrzeugs auswirkt, ist jedoch nicht einzig und allein von der Anzahl der vorgenommenen Nutzerinteraktionen bzw. der zeitlichen Abfolge dieser Nutzerinteraktionen abhängig. Vielmehr haben auch andere Faktoren einen Einfluss, welche Nutzerinteraktionen als sicher und/oder unbedenklich eingestuft werden können. Diese Faktoren umfassen beispielsweise einen Zustand des Fahrers selbst, beispielsweise dessen Angespanntheit, Müdigkeit, aber auch Faktoren wie Umgebungsbedingungen, beispielsweise ein Verkehrsaufkommen oder auch einfach die Fahrsituation, in der sich das Fahrzeug aktuell befindet. So ist eine gesteigerte Aufmerksamkeit notwendig, um ein Fahrzeug beispielsweise im innerstädtischen Verkehr zu führen. Im Vergleich hierzu ist bei einer Fahrsituation, bei der beispielsweise mit konstanter Geschwindigkeit auf einer Autobahn gefahren wird, die Belastung des Fahrers durch das Führen des Fahrzeugs geringer. Andere Faktoren können beispielsweise Zustände von Fahrassistenzsysteme sein. Ist z.B. ein Spurerkennungsassistenz aktiv und wird dieser bei einem hohen Konfidenzniveau für die Erkennung der Fahrbahnmarkierungen betrieben, so ist eine geringere Aufmerksamkeit des Fahrzeugführers notwendig als beispielsweise beim Durchfahren eines Baustellenbereichs, in dem die Fahrzeugmarkierungen durch das Assistenzsystem nicht mit demselben Konfidenzniveau erkannt werden können.

Alle Informationen über Faktoren, die eine Belastung des Fahrers beeinflussen, ob durch den Fahrer selbst, das Fahrzeug oder die Umgebung, mit Ausnahme der Nutzerinteraktion mit der mindestens einen Bedieneinrichtung werden hier unter dem Begriff Belastungsinformationen zusammengefasst.

Daher sieht eine bevorzugte Ausführungsform vor, diese Belastungsinformationen dadurch zu berücksichtigen, dass der Unterbrechungsschwellenwert dynamisch angepasst wird. Eine bevorzugte Ausführungsform sieht daher vor, dass die Auswerteeinrichtung ausgebildet ist, Belastungsinformationen zu empfangen und anhand der Belastungsinformationen den Unterbrechungsschwellenwert dynamisch anzupassen.

Bei einer Ausführungsform umfasst die Auswerteeinrichtung ein Stricktheitsmodul, welches ausgebildet ist, Belastungsinformationen auszuwerten und anhand dieser Auswertung den Unterbrechungsschwellenwert dynamisch anzupassen.

Entsprechend wird vorzugsweise auch der Freigabeschwellenwert dynamisch abhängig von Belastungsinformationen angepasst. Eine Ausführungsform sieht daher vor, dass die Auswerteeinrichtung ausgebildet ist, den Freigabeschwellenwert dynamisch abhängig von den Belastungsinformationen anzupassen.

Während der Unterbrechungsschwellenwert bei der dynamischen Anpassung abgesenkt wird, wenn eine hohe Aufmerksamkeit für das Führen des Fahrzeugs erforderlich ist, kann entsprechend der Unterbrechungsschwellenwert angehoben werden, wenn für das Führen des Fahrzeugs eine geringere Aufmerksamkeit notwendig ist, da beispielsweise Assistenzsysteme den Fahrer beim Führen des Fahrzeugs unterstützen und/oder beispielsweise die Fahrsituation aufgrund geringen Verkehrsaufkommens keine hohe Belastung für den Fahrer darstellt.

Bei einigen Ausführungsformen wird der Freigabeschwellenwert nicht angepasst. Bei anderen Ausführungsformen wird der Freigabeschwellenwert für den Fall, dass eine hohe Aufmerksamkeit für das Führen des Fahrzeugs benötigt wird, abgesenkt und entsprechend angehoben, wenn die Fahrsituation keine so hohe Aufmerksamkeit des Fahrers für das Führen des Fahrzeugs benötigt.

Bei einer Ausführungsform kann der Freigabeschwellenwert um einen größeren Betrag als der Unterbrechungsschwellenwert abgesenkt werden, wenn das Führen des Fahrzeugs eine erhöhte Aufmerksamkeit des Fahrers verlangt. Hierdurch wird die erzwungene Bedienpause gegen über dem "Normalzustand" verlängert, die während der Dauer des Blockierzustands eintritt.

Besonders bevorzugt ist vorgesehen, den Fahrer über den Eintritt des Blockierzustands zu informieren. Bei einer bevorzugten Ausführungsform ist daher vorgesehen, dass die Auswerteeinrichtung mit mindestens einer Ausgabeeinrichtung gekoppelt ist, um eine ohne Blickabwendung vom Straßenverkehr wahrnehmbare Blockierinformation über den bestehenden Blockierzustand auszugeben.

Die Ausgabe kann in verschiedenen Modalitäten erfolgen, beispielsweise visuell und/oder akustisch und/oder haptisch.

Besonders bevorzugt ist bei einer Ausführungsform vorgesehen, dass die Ausgabeeinrichtung eine Beleuchtungseinrichtung, vorzugsweise mit einer Vielzahl von Leuchtmitteln, umfasst, wobei die Beleuchtungseinrichtung, vorzugsweise die Vielzahl von Leuchtmitteln, am Rand einer Windschutzscheibe im peripheren Sichtfeld des Fahrers angeordnet ist oder anordenbar ist. Umfasst die Beleuchtungseinrichtung beispielsweise eine Vielzahl von Leuchtmitteln, können die Leuchtmittel LEDs umfassen, die entweder einfarbig, mehrfarbig und/oder unterschiedlich farbig ausgebildet sind und einzeln oder in Gruppen ansteuerbar sind, um den Blockierzustand anzuzeigen.

Um zu verhindern, dass der Fahrer von dem Blockierzustand überrascht wird, ist es vorteilhaft, ein oder mehrere Warnstufen vorzusehen, die einen Fahrer während der Nutzerinteraktion darüber informieren, dass der aktuelle Involvierungswert sich dem Unterbrechungsschwellenwert annähert.

Bein einer bevorzugten Ausführungsform ist daher vorgesehen, dass die Auswerteeinrichtung eine Warneinrichtung umfasst, die den aktuellen Involvierungswert mit mindestens einem Warnschwellenwert vergleicht mindestens eine Warnung über einen Bevorstehenden Blockierzustand über die mindesten eine Ausgabeeinrichtung und/oder die Bedieneinrichtung und/oder eine Anzeigeeinrichtung ausgibt, wenn der aktuelle involvierungswert den mindestens einen Warnschwellenwert unterschreite oder erreicht. Sind beispielsweise mehrere Warnschwellen vorgesehen, so ist für jede der Warnschwellen ein Warnschwellenwert vorgesehen. Vorzugsweise sind diese relativ zu dem Unterbrechungsschwellenwert definiert, sodass auch bei einer dynamischen Anpassung des Unterbrechungsschwellenwertes die Warnschwellenwerte entsprechend angepasst werden. Andere Ausführungsformen können jedoch vorsehen, dass die Warnschwellenwerte festen Werten zugeordnet sind und jeweils dann der entsprechende Warnzustand herbeigeführt wird, wenn der dem Warnzustand zugeordnete Warnschwellenwert durch den aktuellen Involvierungswert überschritten oder erreicht wird. Existieren Mehrzahl von Warnschwellenwerten und überschreitet der aktuelle Involvierungswert mehrere dieser Warnschwellenwerte, so ist der Warnzustand aktive, dem der Warnschwellenwert zugeordnet ist, der den geringsten Abstand zu dem Unterbrechungsschwellenwert aufweist.

Besonders bevorzugt wird der Fahrer über die Ausgabeeinrichtung über den Eintritt eines Warnzustands informiert. Beispielsweise können bei einer Ausführungsform, bei der die Ausgabeeinrichtung eine Vielzahl von Leuchtmitteln im peripheren Sichtbereich des Fahrers aufweist, die Leuchtmittel so angesteuert werden, dass Licht einer bestimmten Farbe emittiert wird, die mit dem Warnzustand verknüpft ist. Dem Blockierzustand ist dann vorzugsweise auch entsprechend eine Farbe zugeordnet. Beispielsweise ist einem ersten Warnzustand die Farbe Gelb zugeordnet, einem zweiten Warnzustand die Farbe Orange und dem Blockierzustand die Farbe Rot. Es versteht sich, dass auch nur eine Warnstufe oder mehr als zwei Warnstufen vorgesehen sein können.

Um den Fahrer zu informieren, dass der Blockierzustand beendet ist, wird an den Fahrer vorzugsweise ebenfalls eine Information über die Ausgabeeinrichtung ausgegeben. Dies kann beispielsweise über ein akustisches Signal erfolgen. Ebenso kann dies visuell, beispielsweise über die Vielzahl von Leuchtmitteln, erfolgen, die im normalen Bedienzustand ausgeschaltet sind. Um dem Fahrer zu vermitteln, dass der aktuelle Involvierungswert sich während des Blockierzustands kontinuierlich oder schrittweise absenkt, ist bei einer Ausführungsform vorgesehen, dass die Anzahl der Leuchtmittel, die Licht emittieren, um den Blockierzustand anzuzeigen, verringert wird, wenn der aktuelle Involvierungswert sinkt. Vorzugsweise gilt hier eine Proportionalität zwischen dem aktuellen Involvierungswert und der Anzahl der lichtemittierenden Leuchtmittel.

Weist die mindestens eine Bedieneinrichtung eine Anzeige in Form eines freiprogrammierbaren Bildschirms oder Displays auf, so wird der Blockierzustand vorzugsweise auch durch Symbole und/oder alphanumerische Zeichen für den Nutzer angezeigt. Insbesondere erscheint eine statische Anzeige, die nur auf den Blockierzustand hinweist, sodass der Nutzer animiert wird, seinen Blick und seine Aufmerksamkeit dem Fahrgeschehen zuzuwenden.

Es versteht sich für den Fachmann, dass es bestimmte Funktionalitäten geben kann, die über die mindestens eine Bedieneinrichtung bedient werden, die aufgrund ihrer hohen Bedeutung für die Fahrsicherheit durch den Blockierzustand nicht eingeschränkt oder gesperrt werden. Beispielsweise betrifft dies eine Rückfahrkamera, deren Videobild des rückwertigen Verkehrsraums des Fahrzeugs auch im Blockierzustand auf einer Anzeigeeinrichtung der mindestens einen Bedieneinrichtung darstellt wird.

Weist die mindestens eine Bedieneinrichtung Bedienelemente, welche durch einen Fahrer nicht während des Führens des Fahrzeugs bedient werden können, oder eine Schnittstelle auf, über die eine Fernsteuerung über Bedieneinrichtungen möglich ist, die nicht im Griffbereich des Fahrers befindlich sind, so werden hierüber erfasste Nutzerinteraktionen nicht berücksichtigt, um den aktuellen Involvierungswert zu steigern. Ist jedoch beispielsweise ein Touchscreen der mindestens einen Bedieneinrichtung in einer Mittelkonsole zwischen dem Fahrer und dem Beifahrer angeordnet, so werden Nutzerinteraktionen des Fahrers wie des Beifahrers registriert und, sofern keine Fahrer-Beifahrererkennung möglich ist, alle verwendet, um den aktuellen Involvierungswert zu verändern.

Nachfolgend wird die Erfindung unter Bezugnahme auf eine Zeichnung näher erläutert. Hierbei zeigen:
- Fig. 1: eine schematische Darstellung eines Fahrzeugs mit einer Vorrichtung zum involvierungsabhängigen dynamischen Sperren einer Bedieneinrichtung;
- Fig. 2: eine schematische Darstellung eines Blockdiagramms zur Veranschaulichung des aktuellen Involvierungswerts;
- Fig. 3: eine Vielzahl von Balkendiagrammen zur Visualisierung des aktuellen Involvierungswerts zu unterschiedlichen Zeitpunkten während der Nutzerinteraktion;
- Fig. 4: eine schematische Innenansicht eines Fahrzeugcockpits mit einer vergrößert dargestellten Bedieneinrichtung im nicht blockierten Zustand;
- Fig. 5: eine schematische Innenansicht eines Cockpits mit einer Bedieneinrichtung im Warnzustand;
- Fig. 6: eine schematische Darstellung einer Cockpit-Innenansicht, bei der die Bedieneinrichtung im Blockierzustand ist;
- Fig. 7: eine schematische Darstellung der Wirkungsweise von zwei Zustandsmaschinen auf die Ermittlung des aktuellen Involvierungswerts; und
- Fig. 8: eine schematische Darstellung eines vorderen Bereichs eines Fahrzeugs mit mehreren Anzeige- und/oder Bedieneinrichtungen.

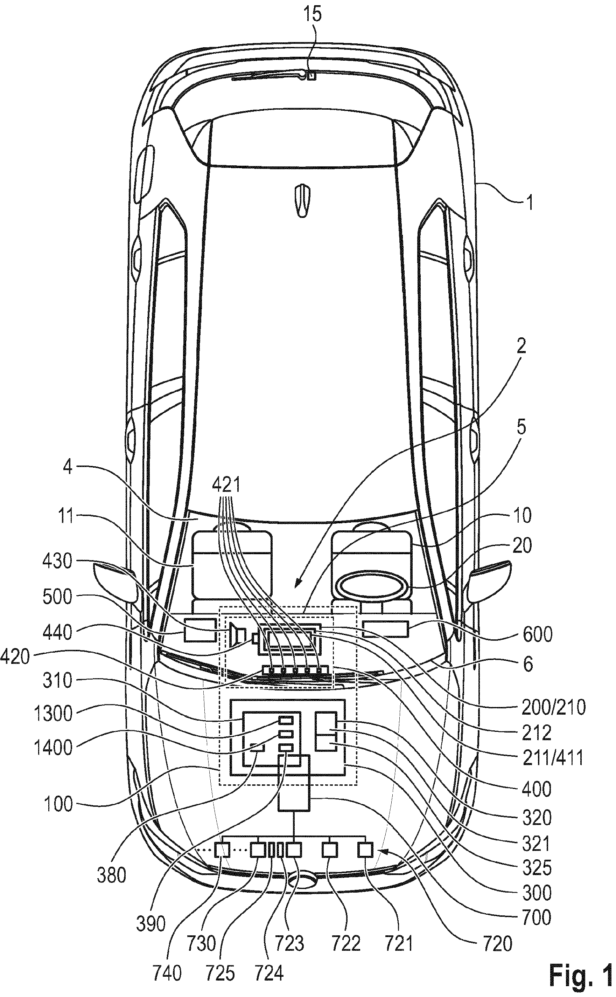

In Fig. 1 ist schematisch ein Kraftfahrzeug 1 dargestellt. Dieses umfasst eine Vorrichtung 100 zum Sperren mindestens einer Bedieneinrichtung 200. Diese Bedieneinrichtung 200 ist beispielsweise als Touchscreen 210 in einem Cockpit 2, beispielsweise in einer Mittelkonsole 5, zwischen einem Fahrersitz 10 und einem Beifahrersitz 11 angeordnet. Der Touchscreen 210 besitzt eine Anzeigeeinrichtung 211, die mit einer Positionserfassungseinheit 212 gekoppelt ist. Über die mindestens eine Bedieneinrichtung 200, welche neben dem Touchscreen 210 weitere Bedieneinheiten umfassen kann, welche hier nicht dargestellt sind, können unterschiedlichste Fahrzeugsysteme und Funktionen bedient werden. Hierzu berührt ein Nutzer den Touchscreen 210 mit einem Betätigungselement, beispielsweise einem Finger. In unterschiedlichen Anzeige- und Bedienkontexten können unterschiedliche visuelle Informationen auf der Anzeigeeinrichtung 211 dargestellt werden. Beispielsweise können virtuelle Bedienelemente in Form von Tastern, Schiebereglern usw. dargestellt sein. Berührt ein Benutzer den Touchscreen 210 im Bereich der Darstellungsfläche eines Bedienelements, so wird diese Nutzerinteraktion als Betätigung des Bedienelements erfasst.

Um Nutzerinteraktionen auf der mindestens einen Bedieneinrichtung 200 vorzunehmen, muss der Fahrer in der Regel, um sich zu orientieren, zumindest zeitweilig seinen Blick vom Fahrgeschehen abwenden. Daher ist es für die Fahrsicherheit bedenklich, wenn eine Bedienung eines Fahrzeugsystems oder einer Fahrzeugfunktion eine Vielzahl von Nutzerinteraktionen erfordert. Ebenso ist es nachteilig, wenn ein Fahrer als Nutzer mehrere Fahrzeugfunktionen oder Systeme in zeitlich kurzer Abfolge bedient. Daher weist die Vorrichtung 100 zum Sperren der mindestens einen Bedieneinrichtung 200 eine Auswerteeinrichtung 300 auf. Diese empfängt die Informationen über die von der mindestens einen Bedieneinrichtung 210 erfasst die Nutzerinteraktionen und wertet diese aus.

Die mindestens eine Bedieneinrichtung ist ausgebildet die Nutzerinteraktionen positionsaufgelöst und zeitaufgelöst zu erfassen. Wenn hier von der Auswertung der positions- und zeitaufgelöst erfassten Nutzerinteraktionen die Rede ist, ist immer das Auswerten der Informationen über die mittels der mindestens einen Bedieneinrichtung erfassten Nutzerinteraktionen gemeint. Der Begriffe Nutzerinteraktion oder Betätigung etc. werden im Zusammenhang mit der Auswertung als Synonym verkürzend für die Information über die erfasste Nutzerinteraktion oder Betätigung etc. verwendet. Eine erfasste Nutzerinteraktion ist somit ein verkürzendes Synonym für die Informationen über die erfasste Nutzerinteraktion.

Die Auswerteeinrichtung 300 empfängt Informationen über die sowohl positionsaufgelöst als auch zeitaufgelöst erfassten Nutzerinteraktionen und ermittelt anhand dieser Informationen einen aktuellen Involvierungswert. Der aktuelle Involvierungswert ist ein Maß dafür, wie stark der Nutzer in die Bedienung der mindestens einen Bedieneinrichtung involviert ist. Je größer die Involvierung in die Bedienung ist, desto geringer ist seine Aufmerksamkeit für das Verkehrsgeschehen.

Eine Funktionalität der Auswerteeinrichtung ist in der Regel mittels einer programmgesteuerten Prozessoreinheit 310 realisiert. Neben dem Prozessor 310 umfasst die Auswerteeinrichtung daher einen Speicher 320, welche einen Programmspeicher 321 sowie einen Arbeits- und Parameterspeicher 325 umfasst. Im Programmspeicher 321 ist das Programm abgelegt, dessen Ausführung auf der Prozessoreinheit die Funktionalität der Auswerteeinrichtung 300 bereitstellt. In dem Arbeits- und Parameterspeicher 325 werden Daten abgelegt, die für die Funktionalität von Bedeutung sind. Ein Teil der Parameter kann auch im Programmspeicher 321 abgelegt sein. Beispielsweise die Parameter, die Schwellenwerte oder deren Standardwerte bei dynamisch veränderlichen Schwellenwerten festlegen, können im Programmspeicher 321 abgelegt sein.

Die Auswerteeinrichtung 300 ist ausgebildet, einen aktuellen Involvierungswert anhand der Nutzerinteraktionen, die mit der mindestens einen Bedieneinrichtung 200 erfasst sind, zu ermitteln. Bei jeder erfassten Nutzerinteraktion wird der aktuelle Involvierungswert erhöht. Zeitkontinuierlich oder in zeitlichen Abständen wird der aktuelle Involvierungswert erniedrigt, unabhängig davon, ob eine Nutzerinteraktion stattgefunden hat oder nicht, sofern der aktuelle Involvierungswert nicht seinen Basiswert, in der Regel den Wert Null, erreicht hat.

Darüber hinaus ist die Auswerteeinrichtung 300 ausgebildet, den aktuellen Involvierungswert mit einem Unterbrechungsschwellenwert zu vergleichen. Wird dieser Unterbrechungsschwellenwert erreicht oder überschritten, so tritt ein Blockierzustand ein und sperrt die Auswerteeinrichtung 300 die Bedieneinrichtung 200 oder schränkt deren Bedienung zumindest ein. Weitere Nutzereingaben werden ignoriert, sofern die mindestens eine Bedieneinrichtung 200 gesperrt ist. Ist die mindestens eine Bedieneinrichtung 200 nur hinsichtlich der Bedienung eingeschränkt, so werden Nutzerinteraktionen ignoriert, die gesperrte Funktionen und Funktionalitäten betreffen. Hierdurch wird es möglich, einzelne sicherheitsrelevante Bedienungen zuzulassen, beispielsweise fahrsicherheitsrelevante Eingaben über die mindestens eine Bedieneinrichtung 200 weiterhin auszuführen.

Vorzugsweise wird auch eine Ausgabe von Inhalten der über die mindestens eine Bedieneinrichtung 200 zu bedienenden Funktionen und/oder Funktionalitäten gesperrt. Hiervon sind jedoch nicht solche Inhalte betroffen, die fahrsicherheitsrelevant sind, wie beispielsweise die Videoanzeige des rückwärtigen Verkehrsraums, der von einer Rückfahrkamera 15 erfasst wird.

Um den Nutzer darüber zu informieren, dass ein Blockierzustand der mindestens einen Bedieneinrichtung 200 eingetreten ist, weist die Vorrichtung 100 eine Ausgabeeinrichtung 400 auf. Diese kann unterschiedliche Teilsysteme umfassen, um die Ausgabe multimodal zu gestalten. Zum einen wird auf der Anzeigeeinrichtung 410 des Touchscreens 210 beispielsweise ein Anzeigekontext dargestellt, der den Fahrer auffordert, seine Aufmerksamkeit dem Verkehrsgeschehen zuzuwenden. Zusätzlich oder alternativ kann eine akustische Ausgabe über ein Audiosystem 430 des Fahrzeugs 1 erfolgen. Ebenso alternativ oder zusätzlich ist es möglich, den Nutzer über das Eintreten des Blockierzustands haptisch zu informieren, beispielsweise über eine haptische Rückkopplungseinheit 440, die mit dem Touchscreen 210 gekoppelt ist. Wiederum alternativ oder zusätzlich können auch haptische Rückkopplungsmittel in einem Lenkrad 20 genutzt werden.

Wiederum alternativ oder zusätzlich kann eine Beleuchtungseinrichtung 420 verwendet werden, die beispielsweise in einem peripheren Sichtbereich des Fahrers an einem Rand 6 der Windschutzscheibe 4 angeordnet ist. Die Beleuchtungseinrichtung 420 umfasst beispielsweise eine Vielzahl von Leuchtmitteln 421, welche beispielsweise als Leuchtdioden ausgebildet sind. Um den Fahrer vorzuwarnen, dass eine weitere Nutzereingabe über die mindestens eine Bedieneinrichtung 200 zu einem Blockierzustand dieser mindestens einen Bedieneinrichtung 200 führen kann, weist die Auswerteeinrichtung 300 eine Warneinrichtung 390 auf. Diese ist bei einer bevorzugten Ausführungsform ebenfalls in den Programmcode, der die sonstige Funktionalität der Auswerteeinrichtung 300 bereitstellt, integriert und hier nur aus Gründen der Veranschaulichung als gesonderte Einheit dargestellt. Die Warneinrichtung 390 vergleicht den aktuellen Involvierungswert mit einer oder mehreren Warnschwellenwerten. Wird ein Warnschwellenwert erreicht oder überschritten, wird an den Fahrer über die Ausgabeeinrichtung 400 eine Warnung ausgegeben. Dieses kann erneut visuell, akustisch und/oder haptisch und/oder in beliebiger Kombination erfolgen. Beispielsweise kann die Beleuchtungseinrichtung 420 im peripheren Sichtfeld des Fahrers eingeschaltet werden. Sind unterschiedliche Warnschwellen vorgesehen, so kann Licht unterschiedlicher Farbe emittiert werden, wobei die Farbe der entsprechenden Warnschwelle zugeordnet ist. Beispielsweise kann beim Erreichen einer ersten Warnschwelle gelbes Licht emittiert werden, beim Erreichen einer zweiten Warnschwelle, bei deren Erreichen der aktuelle Involvierungswert einen geringeren Abstand von dem Unterbrechungsschwellenwert aufweist, Licht einer anderen Farbe, beispielsweise rotes Licht, emittiert werden.

Bei einer bevorzugten Ausführungsform, wie sie in Fig. 1 dargestellt ist, ist die Vorrichtung mit einem Belastungsmanagementsystem 700 verbunden. Alternativ kann dieses Belastungsmanagementsystem 700 als Bestandteil der Auswerteeinrichtung 300 ganz oder teilweise ausgebildet sein. Das Belastungsmanagementsystem 700 wertet Belastungsfaktoren aus. Hierfür überwacht Belastungsmanagementsystem 700 verschiedene Assistenzsysteme 720, beispielsweise einen Spurhalteassistenten 721, ein Fahrstabilitätsassistenten (ESP) 722, ein Navigationssystem 723, eine Geschwindigkeitsregelanlage 724 und/oder weitere Assistenzsysteme 725. Ferner ist das Belastungsmanagementsystem 700 mit einem Fahrerüberwachungssystem 730 gekoppelt, welches beispielsweise eine Müdigkeitserkennung und Ähnliches umfassen kann und Informationen über den Fahrer bereitstellt. Darüber hinaus ist das Belastungsmanagementsystem 700 bevorzugt auch noch mit anderen Fahrzeugsteuergeräten 740 verbunden, die Informationen über den Zustand des Fahrzeugs 1 und/oder die Umgebung liefern. Anhand der von den verschiedenen Systemen und Geräten bereitgestellten Informationen, die hier alle gemeinsam als Belastungsinformationen bezeichnet sind, ermittelt das Belastungsmanagement 700, welchen Belastungen der Fahrer beim Führen des Fahrzeugs aktuell ausgesetzt ist. Hieraus kann ermittelt werden, wie hoch die erforderliche Aufmerksamkeit des Fahrers für das Führen des Fahrzeugs ist. Bei einer bevorzugten Ausführungsform ist die Auswerteeinrichtung 300 so ausgebildet, dass diese abhängig von der Information des Belastungsmanagementsystems 700 den Unterbrechungsschwellenwert dynamisch anpasst. Hierfür ist in einigen Ausführungsformen eine Striktheitsmodul 380 der Auswerteeinrichtung vorgesehen. Ist beispielsweise ein Spurhalteassistent aktiv und hat einen hohen Konfidenzwert für das Erkennen der Fahrspur und wird beispielsweise die Geschwindigkeit über die Geschwindigkeitsregelanlage geregelt, so ist die erforderliche Aufmerksamkeit des Fahrers geringer einzustufen als in einer Situation, in der das Spurassistenzsystemen die Fahrspuren nicht erkennen kann und die Geschwindigkeit durch den Fahrer geregelt wird. Entsprechend wird der Unterbrechungsschwellenwert abgesenkt, wenn das Belastungsmanagementsystem 700 anzeigt, dass die vom Fahrer benötigte Aufmerksamkeit geringer ist. Ist die benötigte Aufmerksamkeit hingegen hoch, so wird auch der Unterbrechungsschwellenwert angehoben.

Um zu erreichen, dass der Fahrer seine Bedienung des mindestens einen Bediensystems unterbricht und sich dem Fahrgeschehen zuwendet, wenn der Blockierzustand eingetreten ist, wird der Blockierzustand der mindestens einen Bedieneinrichtung 200 bei bevorzugten Ausführungsformen erst beendet und die Bedieneinrichtung 200 für erneute Bedienungen freigegeben, wenn der aktuelle Involvierungswert unter einen Freigabeschwellenwert oder auf diesen gefallen ist. Auch der Freigabeschwellenwert kann abhängig von den Informationen des Belastungsmanagementsystems 700 dynamisch angepasst werden. Die Anpassung kann so erfolgen, dass immer dieselbe Zeitspanne benötigt wird, um den aktuellen Involvierungswert um einen Betrag zu verringern, der der Differenz zwischen dem Unterbrechungsschwellenwert und dem Freigabeschwellenwert entspricht. Andere Ausführungsformen können jedoch vorsehen, dass der Unterbrechungsschwellenwert und der Freigabeschwellenwert dynamisch so angepasst werden, dass die Zeitspanne, die benötigt wird, um nach dem Erreichen des Blockierzustands den aktuellen Involvierungswert wieder auf oder unter den Freigabeschwellenwert abzusenken, größer wird, wenn von dem Fahrer zum Führen des Fahrzeugs eine größere Aufmerksamkeit benötigt wird.

Bevorzugt werden Ausführungsformen, bei denen in einem normalen Betriebszustand ein mittlerer Unterbrechungsschwellenwert und ein mittlerer Freigabeschwellenwert verwendet werden, die jeweils abgesenkt werden, wenn eine besonders erhöhte Aufmerksamkeit notwendig ist, und entsprechend angehoben werden, wenn nur eine verringerte Aufmerksamkeit des Fahrers zum Führen des Fahrzeugs benötigt wird.

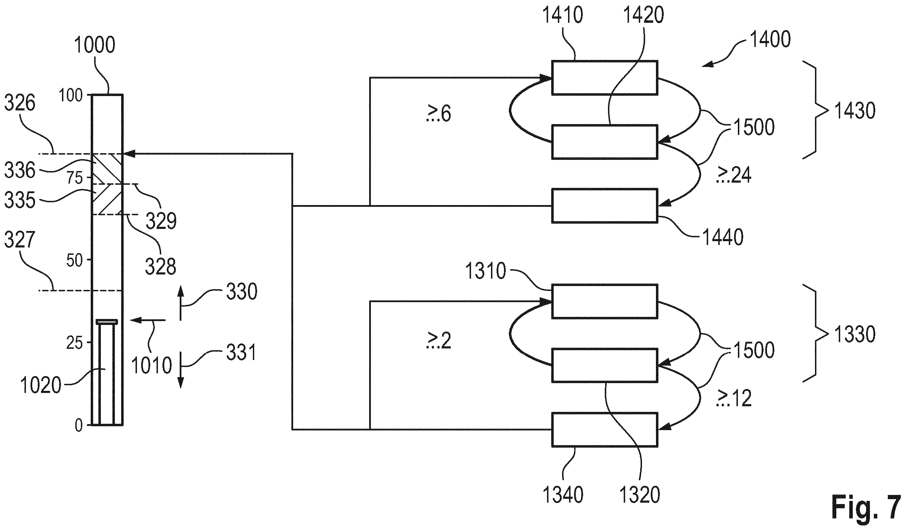

Zusätzlich wird der aktuelle Involvierungswert bei einer bevorzugten Ausführungsform über eine Zustandsmaschine 1300 und eine weitere Zustandsmaschine 1400 beeinflusst, die in der Auswerteeinrichtung umgesetzt sind. Deren Funktionsweise wird unten im Zusammenhang mit Fig. 7 näher erläutert.

Neben der mindestens einen Bedieneinrichtung 200, welche in dem dargestellten Bespiel auch eine Anzeigeeinrichtung 211 des Touchscreens 210 umfasst, können auch noch weitere Anzeigeeinheiten, beispielsweise eine Beifahreranzeigeeinheit 500 vor dem Beifahrer und/oder eine Anzeige des Kombiinstruments 600, von der Auswerteeinrichtung 300 gesteuert werden und Anzeigeinhalte im Blockierzustand gesperrt werden, sofern der Fahrer Inhalte auf den entsprechenden Anzeigeeinheiten wahrnehmen kann. Ist die Beifahreranzeigeeinheit 500 nur für den Beifahrer wahrnehmbar, so findet ein Sperren von Anzeigekontexten auf der Beifahreranzeigeeinheit 500 in der Regel nicht statt.

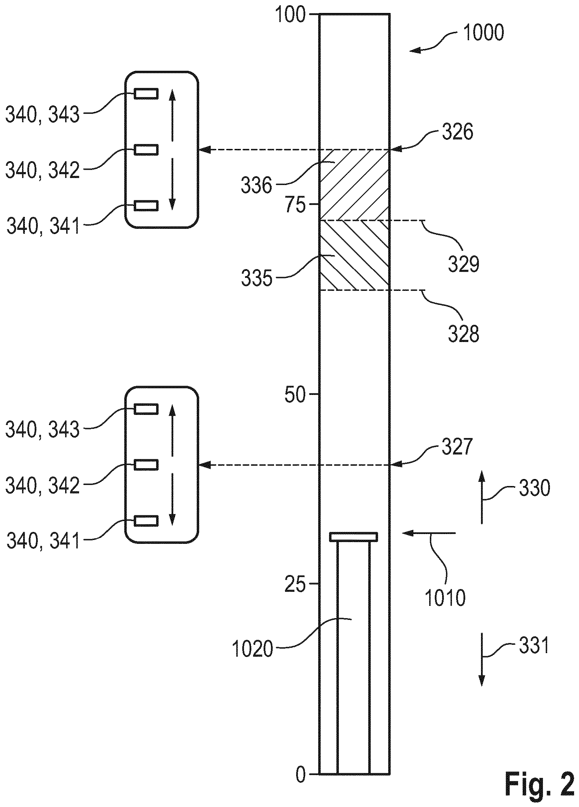

In Fig. 2 ist schematisch ein Balkendiagramm dargestellt, in dem der aktuelle Involvierungswert 1010 über einen Balken 1020 dargestellt ist. Ferner sind die unterschiedlichen Schwellenwerte dargestellt. Diese umfassen einen Warnschwellenwert 328 und in dieser Ausführungsform einen weiteren Warnschwellenwert 329, den Unterbrechungsschwellenwert 326 sowie den Freigabeschwellenwert 327. Ein Warnbereich 335 oberhalb des einen Warnschellenwert 328 und ein weiterer Warnbereich 336 oberhalb des weiteren Warnschwellenwerts 329 sind schraffiert um anzudeuten, dass ein Fahrer beispielsweise über farbiges Licht auf einen bevorstehenden Blockierzustand bei weiterer Nutzerinteraktion informiert wird. Die unterschiedlichen Schraffuren deuten unterschiedliche Farben an.

Über einen Pfeil 330 nach oben ist angedeutet, dass der aktuelle Involvierungswert entweder um einen Distanzbetätigungswert oder einen Lokalbetätigungswert und gegebenenfalls zusätzlich um einen Dauerbetätigungswert erhöht wird. Zusätzlich können eine oder mehrere Zustandsmaschinen den aktuellen Betätigungswert erhöhen.

Ein Pfeil 331 nach unten deutet an, dass hierzu konkurrierend und ergänzend der aktuelle Betätigungswert kontinuierlich mit der Zeit abgesenkt wird.

Neben dem Unterbrechungsschwellenwert 326 sind dem Freigabeschwellenwert 327 ist jeweils drei Belastungszustände 340 schematisch dargestellt, die für den Fahrer und die Fahrsituation ermittelt sind. Bei einem niedrigen Belastungszustand 341 werden der Unterbrechungsschwellenwert 326 und Freigabeschwellenwert 327 gegenüber den entsprechenden Werten bei einem normalen oder mittleren Belastungszustand 342 abgesenkt. Bei einem hohen Belastungszustand 343 werden der Unterbrechungsschwellenwert 326 und Freigabeschwellenwert 327 gegenüber den entsprechenden Werten bei einem normalen oder mittleren Belastungszustand 342 angehoben.

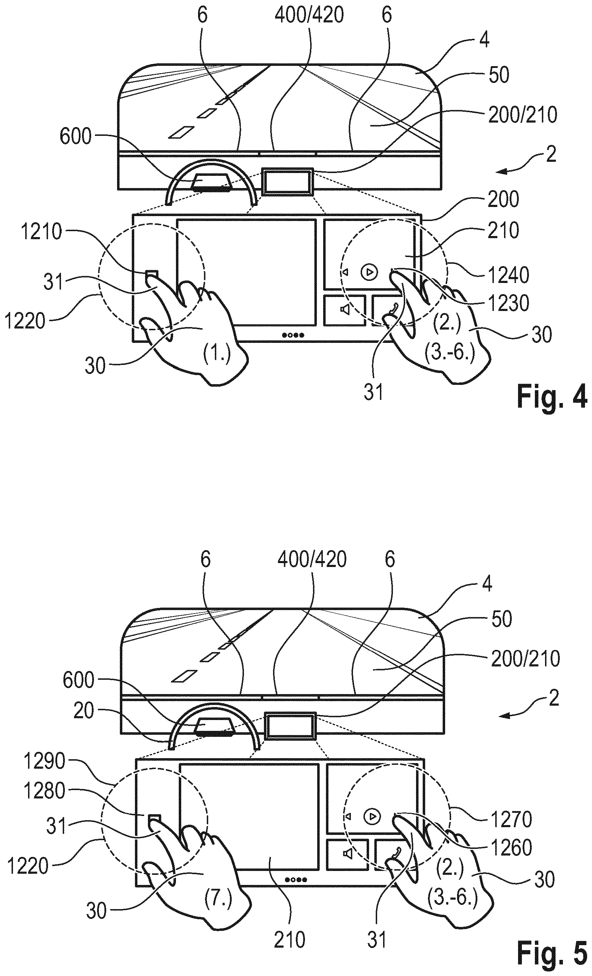

Anhand von Fig. 4 soll schematisch erläutert werden, wie der aktuelle Involvierungswert ermittelt und verändert wird. In Fig. 4 ist schematisch die Innenansicht eines Fahrzeugcockpits 2 aus Sicht des Fahrers dargestellt. Zu erkennen sind das Lenkrad 20, eine als Touchscreen 210 ausgebildete mindestens eine Bedieneinrichtung 200, eine Kombiinstrumentanzeige 600, ein unterer Rand 6 der Windschutzscheibe 4 sowie eine durch die Windschutzscheibe 4 sichtbare Straße 50. Am unteren Rand 6 der Windschutzscheibe 4 ist die Beleuchtungseinrichtung 420 der Ausgabeeinrichtung 400 zu erkennen. Im Vordergrund ist vergrößert der Touchscreen 210 der mindestens einen Bedieneinrichtung 200 dargestellt. Mit einem als Finger 31 ausgebildeten Betätigungselement nimmt ein Nutzer beispielsweise an einer ersten Berührposition 1210 eine Nutzereingabe vor. Hierdurch wird der aktuelle Involvierungswert um einen konstanten Distanzbetätigungswert erhöht. Dieses hat seine Ursache darin, dass zuvor innerhalb einer Lokalbetätigungszeitspanne, welche beispielsweise einige 100 Millisekunden, in einer anderen Ausführungsform 1 Sekunde, lang ist, zuvor keine Betätigung innerhalb eines Nahbereichs 1220 um die erste Berührposition 1210 vorgenommen wurde. Im Anschluss nimmt der Nutzer eine zweite Betätigung an der zweiten Berührposition 1230 vor. Da dieses nicht in dem Nahbereich 1220 der zuvor ausgeführten ersten Betätigung an der ersten Betätigungsposition 1210 erfolgt, wird erneut der aktuelle Involvierungswert um den konstanten Distanzbetätigungswert erhöht.

Nachfolgend führt der Nutzer im dargestellten Beispiel eine dritte bis sechste Betätigung innerhalb des Nahbereichs 1240 der zweiten Berührposition 1230 jeweils mit einer Zeitdifferenz aus, die kleiner als die Nahbereichsspanne ist, welche beispielsweise einige 100 Millisekunden beträgt. Für die dritte bis sechste Nutzerinteraktion wird der aktuelle Involvierungswert jeweils nur um den Lokalbetätigungswert erhöht, welcher geringer als der Distanzbetätigungswert ist.

Zusätzlich wird geprüft, ob eine Betätigungsdauer der Nutzerinteraktion eine Kurzzeitbetätigungszeitspanne erreicht oder überschritten hat. In diesem Fall wird der aktuelle Involvierungswert zusätzlich um einen Betätigungsdauerinvolvierungswert erhöht. Der Betätigungsdauerinvolvierungswert ist vorzugsweise variabel. Dauert die Betätigung länger als die Kurzzeitbetätigungszeitspanne und kürzer als eine Maxiamalbetätigungszeitspanne an, so wird der Betätigungsdauerinvolvierungswert vorzugsweise gleich dem Produkt aus einem Betätigungsdauergewichtungswert und einer Differenz der Betätigungsdauer und Kurzzeitbetätigungszeitspanne, oder präziser ausgedrückt dem die Dauer der Kurzzeitbetätigungszeitspanne angebenden Wert. Dauert die Betätigung länger als die Maxiamalbetätigungszeitspanne, wird der Betätigungsdauerinvolvierungswert auf einen Betätigungsdauerinvolvierungsmaximalwert gesetzt. Dieser entspricht vorzugsweise dem Produkt aus dem Betätigungsdauergewichtungswert und der zeitlichen Differenz der Längen der Maxiamalbetätigungszeitspanne und der Kurzzeitbetätigungszeitspanne. Vorzugsweise ist somit der Betätigungsdauerinvolvierungswert entweder gleich einem Produkt des Betätigungsdauergewichtungswerts und einer Differenz der Betätigungsdauer und der Kurzzeitbetätigungszeitspanne oder, wenn diese Differenz größer als ein Betätigungsdauerinvolvierungsmaximalwert ist, gleich einem Produkt des Betätigungsdauergewichtungswerts und dieses Betätigungsdauerinvolvierungsmaximalwerts.

Bei der dargestellten Ausführungsform wird beispielsweise davon ausgegangen, dass beim Ausführen der sechsten Nutzerinteraktion der aktuelle Involvierungswert einen ersten Warnungsschwellenwert überschreitet. Daraufhin wird über die Beleuchtungseinrichtung 420 im peripheren Sichtbereich des Fahrers am unteren Rand 6 der Windschutzscheibe 4 gelbes Licht emittiert. Zusätzlich oder alternativ kann eine haptische Rückkopplung über den Touchscreen 210 oder/oder eine Audioausgabe über ein Audiosystem (nicht dargestellt) erfolgen. Das emittierte Licht, die Audioausgabe und/oder die haptische Rückkopplung warnen den Fahrer vor dem möglichen Eintreten eines Blockierzustands, in dem weitere Nutzerinterkationen mit der mindestens einen Bedieneinrichtung 200 nicht mehr möglich sind und für eine gewisse Zeitspanne ignoriert werden, bis der aktuelle Involvierungswert einen Freigabeschwellenwert erneut erreicht oder unterschritten hat. Dieses tritt aufgrund eines zeitkontinuierlichen oder in Zeitschritten erfolgenden Absenkens des aktuelle Involvierungswerts um einen konstanten Betrag pro Zeiteinheit ein, bis der aktuelle Involvierungswerteinen minimalen Basiswert, beispielsweise Null, erreicht hat.

Dieser Warnzustand ist beispielsweise in Fig. 5 schematisch dargestellt. Gleiche technische Merkmale sind in allen Figuren mit denselben Bezugszeichen gekennzeichnet. Eine siebte Betätigung, deren zeitlicher Abstand die Kurzzeitbetätigungszeitspanne überschreitet und deren Betätigungsbeginnposition 1280 von der vorausgegangenen Betätigungsbeginnposition 1260 der sechsten Nutzerinteraktion um mehr als deren Nahbereichsschwellenwert beabstandet ist, wird der aktuelle Involvierungswert erneut um den konstanten Distanzbetätigungswert erhöht. Die Nahbereiche 1270 und 1290 sind ebenfalls dargestellt. Die Nutzerinteraktion dauert für eine Zeitspanne an, die größer als die Kurzzeitbetätigungszeitspanne ist. Daher wird der aktuelle Involvierungswert um einen Betätigungsdauerinvolvierungswert erhöht, der, wie oben beschrieben ist, errechnet wird.

Hierdurch wird beispielsweise der weitere Warnschwellenwert überschritten, sodass eine Farbe des von der Beleuchtungseinrichtung 420 der Ausgabeeinrichtung 400 emittierten Lichts verändert wird, beispielsweise nun rotes Licht emittiert wird. Dem Fahrer wird im peripheren Sichtfeld hierdurch mitgeteilt, dass bei einer weiteren Nutzerinteraktion über die mindestens eine Bedieneinrichtung 200 ein Blockierzustand droht.

Führt der Nutzer eine weitere Nutzerinteraktion aus, bevor der aktuelle Involvierungswert aufgrund der mit der Zeit eintretenden Verringerung ausreichend gesunken ist, so wird bei der erneuten Nutzerinteraktion durch den aktuellen Involvierungswert der Unterbrechungsschwellenwert erreicht oder überschritten und in einen Blockierungszustand der mindestens einen Bedieneinrichtung 200 gewechselt.

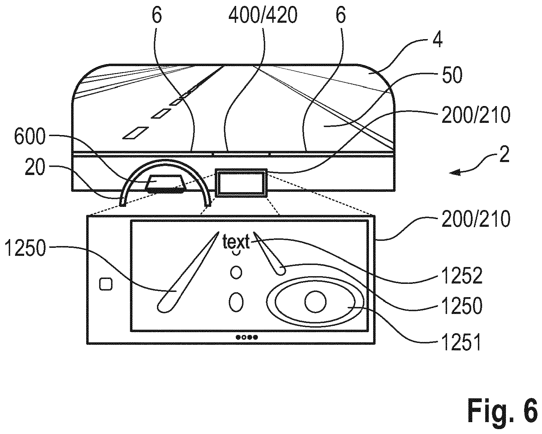

Dieses ist exemplarisch in Fig. 6 dargestellt. Auf der Anzeigeeinrichtung 211 des Touchscreens 210 wird über graphische Symbole wie beispielsweise eine stilisierte Fahrbahn 1250 sowie ein stilisiertes Auge 1251 und zusätzlich beispielsweise durch einen Text 1252 der Fahrer dazu aufgefordert, seine Aufmerksamkeit der Straße 50 zuzuwenden.

Im Blockierzustand werden weitere Nutzerinteraktionen ignoriert. Bei anderen Ausführungsformen kann vorgesehen sein, dass weiterhin einzelne bestimmte Nutzereingaben erfasst werden, die für sicherheitsrelevante Funktionalitäten notwendig sind. In jedem Fall wird jedoch die Bedienung hinsichtlich bestimmter Funktionen und Funktionalitäten eingeschränkt. In der Regel wird zusätzlich die Anzeige von Informationen zumindest auf der mindestens einen Bedieneinrichtung 200 gegebenenfalls auch auf anderen Anzeigen wie beispielsweise Informationselementen in der Kombiinstrumentanzeige 600 oder anderen im Fahrzeugcockpit 2 enthaltenen Anzeigen (nicht dargestellt) blockiert.

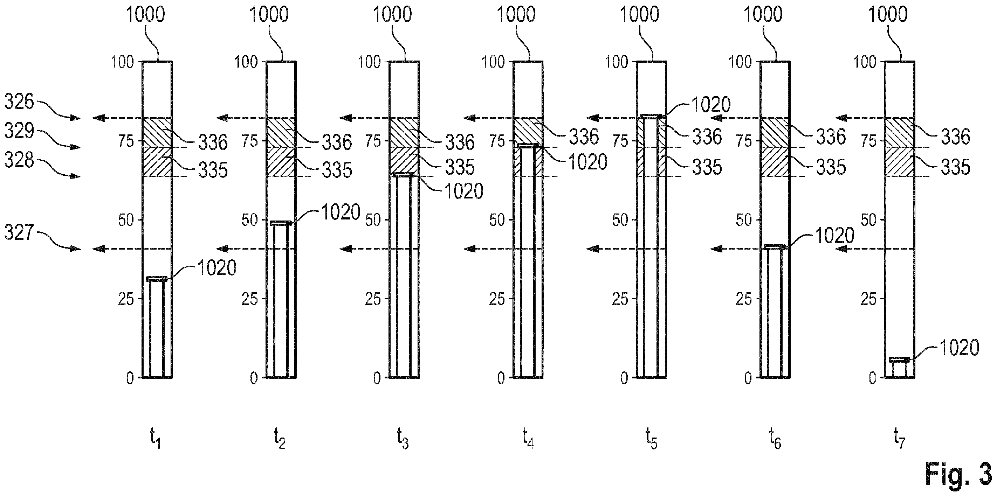

In Fig. 3 sind in zeitlicher Abfolge verschiedene Balkendiagramme 1000 dargestellt, die mit mehreren zeitlich aufeinanderfolgenden Zeitpunkten korrespondieren, die mit tx gekennzeichnet sind, wobei x eine natürliche Zahl ist. Nicht jeder Zeitpunkt muss mit einer Nutzerinteraktion korrespondieren. Auch die zeitlichen Abstände zwischen der verschiedenen Zeitpunkten müssen nicht gleich sein. Gleiche technische Merkmale sind erneut gleich bezeichnet und nicht erneut erläutert.

Während des Ausführens von Nutzerinteraktionen steigt zunächst der aktuelle Involvierungswert 1010 an t1, t2. Zum Zeitpunkt t3 wird durch den aktuellen Involvierungswert 1010 ein Warnschwellenwert 238 erreicht. Dieses wird durch die Ausgabeeinrichtung beispielsweise durch Ändern der Farbe von virtuellen Bedienelementen auf der Anzeigefläche der einen Bedieneinrichtung 200 oder durch Emittieren farbigen Lichts im peripheren Sichtbereich des Fahrers oder auch akustisch über die Ausgabe eines Signals oder über eine haptische Rückkopplung seitens der als Touchscreen ausgebildeten mindestens einen Bedieneinrichtung 200 an den Nutzer ausgegeben.

Durch weitere Nutzerinteraktion wird der aktuelle Involvierungswert 1010 weiter gesteigert und eine weitere Warnschwelle 329 überschritten t4. Auch hier wird erneut eine Warnung durch die Ausgabeeinrichtung ausgegeben, beispielsweise indem das emittierte Licht seine Farbe ändert und/oder virtuelle Bedienelemente verändert dargestellt werden, ein akustisches Signal ausgegeben wird und/oder eine haptische Rückkopplung bereitgestellt wird.

Zum Zeitpunkt t5 wird aufgrund einer weiteren Nutzerinteraktion vom aktuellen Involvierungswert 1010 der Unterbrechungsschwellenwert 326 erreicht oder überschritten und ein Blockierzustand herbeigeführt. Dieser dauert an, bis aufgrund verstrichener Zeit die kontinuierliche Absenkung des aktuellen Involvierungswerts 1010, die mit und ohne Nutzerinteraktion stattfindet, den aktuellen Involvierungswert 1010 wieder auf oder unter den Freigabenschwellenwert 327 abgesenkt hat t6. Ohne Nutzerinteraktion sinkt der aktuelle Involvierungswert 1010 weiter ab t7.

Bei der bevorzugten Ausführungsform wird auch noch eine Interaktionsabfolge der Nutzerinteraktionen mittels einer oder mehreren Zustandsmaschinen überwacht. Hierdurch sollen Nutzerinteraktionen unterbunden werden, bei denen der Nutzer entweder durch besonders schnelle aufeinanderfolgende Nutzerinteraktionen oder durch gezielte langsame, jedoch fortwährende Nutzerinteraktionen versucht, sehr komplexe und die Aufmerksamkeit des Fahrers dennoch beanspruchende Funktionsbedienungen vorzunehmen oder mehrere Funktionen zeitlich unmittelbar nacheinander auszuführen, insbesondere ohne ausreichende Pausen einzulegen.

In Fig. 7 sind schematisch neben einem Balkendiagramm 1000, welches ähnlich dem nach Fig. 2 ist, die Wirkungsweisen einer ersten Zustandsmaschine 1300, welche eine besonders schnelle Bedienung komplexer Funktionalitäten überwacht, und eine weitere Zustandsmaschine 1400, welche eine langsame, jedoch fortwährende Bedienung komplexer Funktionalitäten überwacht, dargestellt. Die Zustandsmaschinen 1300, 1400 überwachen jeweils, ob die zeitlich aufeinanderfolgenden Nutzerinteraktionen eine Gruppe von Nutzerinteraktionen umfasst, bei denen die zeitlich aufeinanderfolgenden Nutzerinteraktionen mit Zeitabständen vorgenommen werden, die kürzer als eine jeweilige Interaktionsintervallzeitspanne sind, die der entsprechenden Zustandsmaschine zugeordnet ist. Zusätzlich ist der jeweiligen Zustandsmaschine eine Interaktionsüberwachungszeitspanne zugeordnet. Die jeweilige Zustandsmaschine 1300, 1400 prüft, ob eine Gruppe von Nutzerinteraktionen, deren Zeitabstände jeweils kürzer als die Interaktionsintervallzeitspanne sind, gemeinsam einen Zeitraum überspannen, der größer oder gleich der Interaktionsüberwachungszeitspanne ist. Ist dieses der Fall, wechselt die entsprechende Zustandsmaschine in einen gesteigerten Involvierungszustand. Dieses bewirkt, dass die Auswerteeinrichtung den aktuellen Involvierungswert auf oder über den Unterbrechungsschwellenwert anhebt. Bei der dargestellten Ausführungsform beträgt die Interaktionsüberwachungszeitspanne der einen Zustandsmaschine 1300 beispielsweise 12 Sekunden und die zugeordnete Interaktionsintervallzeitspanne 2 Sekunden. Werden also innerhalb von 12 Sekunden Betätigungen vorgenommen, deren zeitliche Abstände voneinander nie 2 Sekunden erreichen oder überschreiten (oder alternativ 2 Sekunden nie überschreiten), so wechselt diese Zustandsmaschine 1300 in den gesteigerten Involvierungszustand und führt zu einem Blockierzustand der Bedieneinrichtung.

Die Zustandsmaschine 1300 ist somit zunächst in einem internen unbedienten Zustand 1310. Erfolgt eine Nutzerinteraktion so wird einen interner Betätigungszustand 1320 gewechselt. Nach außen ist der Zustand der Zustandsmaschine ein normaler Involvierungszustand 1330. Findet innerhalb der zugeordneten Interaktionsintervallzeitspanne (z. B. 2 Sekunden) eine erneute Betätigung statt, verbleibt die Zustandsmaschine in dem internen Betätigungszustand 1320. Tritt zwischen den Nutzerinteraktionen eine Pause ein, die gleich oder größer der Interaktionsintervallzeitspanne ist, wird in den internen unbedienten Zustand 1310 gewechselt. Verbleibt die Zustandsmaschine für eine Zeitspanne, die gleich oder größer der Interaktionsüberwachungszeitspanne (z. B. 12 Sekunden) ist (alternativ größer als die Interaktionsüberwachungszeitspanne ist), in dem internen Betätigungszustand 1320 so wechselt die Zustandsmaschine in den erhöhten Involvierungszustand 1340, welches ein extern erfassbarer Zustand der Zustandsmaschine 1300 ist. Dieser erhöhte Involvierungszustand 1340 führt dazu, dass der aktuelle Involvierungswert 1010 auf oder über den Unterbrechungsschwellenwert 326 angehoben wird. Anschließend wird die Zustandsmaschine in den normalen Involvierungszustand 1330 mit dem internen unbedienten Zustand 1310 zurückgesetzt.

Der weiteren Zustandsmaschine 1400 ist beispielsweise eine weitere Interaktionsüberwachungszeitspanne von 24 Sekunden zugeordnet und eine weitere Interaktionsintervallzeitspanne von 6 Sekunden zugeordnet. Finden somit für 24 Sekunden oder mehr Sekunden Betätigungen statt, zwischen denen niemals mehr als 6 Sekunden vergehen (oder alternativ niemals 6 Sekunden oder mehr vergehen), so wechselt diese weitere Zustandsmaschine 1400 in den gesteigerten Involvierungszustand und führt ebenfalls dazu, dass der aktuelle Involvierungswert 1010 auf den Unterbrechungsschwellenwert 326 angehoben wird und somit ein Blockierzustand ausgelöst wird.

Die weitere Zustandsmaschine 1400 ist somit zunächst in einem internen unbedienten Zustand 1410. Erfolgt eine Nutzerinteraktion 1500 so wird einen interner Betätigungszustand 1420 gewechselt. Nach außen ist der Zustand der Zustandsmaschine ein normaler Involvierungszustand 1430. Findet innerhalb der zugeordneten Interaktionsintervallzeitspanne eine erneute Betätigung statt, verbleibt die Zustandsmaschine in dem internen Betätigungszustand 1420. Tritt zwischen den Nutzerinteraktionen 1500 eine Pause ein, die gleich oder größer der Interaktionsintervallzeitspanne (z. B. größer als 6 Sekunden) ist, wird in den internen unbedienten Zustand 1410 gewechselt. Verbleibt die Zustandsmaschine für eine Zeitspanne, die gleich oder größer der Interaktionsüberwachungszeitspanne (z. B. 24 Sekunden) ist (alternativ größer als die Interaktionsüberwachungszeitspanne ist), in dem internen Betätigungszustand 1420 so wechselt die Zustandsmaschine in den erhöhten Involvierungszustand 1440, welches ein extern erfassbarer Zustand der Zustandsmaschine 1400 ist. Dieser erhöhte Involvierungszustand 1440 führt dazu, dass der aktuelle Involvierungswert 1010 auf oder über den Unterbrechungsschwellenwert 326 angehoben wird. Anschließend wird die Zustandsmaschine in den normalen Involvierungszustand 1430 mit dem internen unbedienten Zustand 1410 zurückgesetzt.

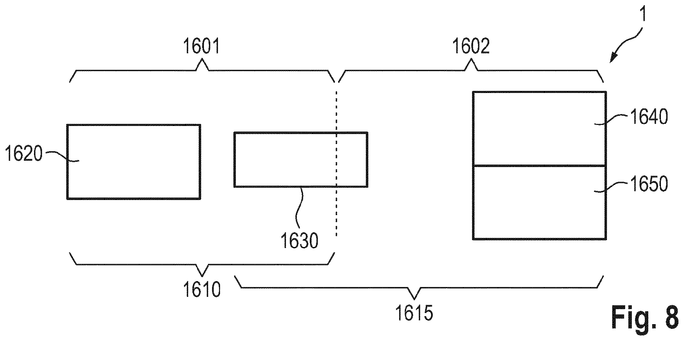

In Fig. 8 ist schematisch ein vorderer Bereich 1600 eines Fahrzeugs 1 dargestellt. Der vordere Bereich 1600 weist eine Fahrerseite 1601 und eine Beifahrerseite 1602 auf. In einem Betätigungsbereich 1610 des Fahrers befinden sich ein Anzeige- und Bedieneinrichtung 1620 und eine weitere Anzeige- und Bedieneinrichtung 1630, beispielsweise zwei Touchscreens, über die der Fahrer Nutzereingaben tätigen kann. Zumindest die eine weitere Anzeige- und Bedieneinrichtung 1630 ist zusätzlich in einem weiteren Betätigungsbereich 1615 des Beifahrers. Zusätzlich befinden sich im vorderen Bereich 1600 des Fahrzeugs 1 eine weitere Anzeigeeinrichtung 1640, deren Inhalt sowohl für den Fahrer als auch den Beifahrer wahrnehmbar sind, als auch eine weitere zusätzliche Anzeigeeinrichtung 1650, deren Inhalt nur durch den Beifahrer wahrnehmbar ist. Während Betätigungen auf den beiden Anzeige- und Bedieneinrichtungen 1620, 1630 dazu führen, dass der aktuelle Involvierungswert entsprechend erhöht wird, unabhängig davon, ob die Nutzerinteraktion durch den Fahrer oder den Beifahrer vorgenommen wird, und entsprechend die Bedienung und gegebenenfalls die Darstellung von Informationen auf den beiden Anzeigeeinrichtungen blockiert wird, sobald der Unterbrechungsschwellenwert durch den aktuellen Involvierungswert erreicht oder überschritten ist, wird auf der weiteren Anzeigeeinrichtung 1640, die sowohl für Fahrer als auch den Beifahrer sichtbar ist, über den jedoch der Fahrer keine Nutzereingaben tätigen kann, der dargestellte Inhalt statisch blockiert, d.h. abhängig von der Fahrsituation die Darstellung bestimmter Inhalte unterbunden, wie beispielsweise die Darstellung bewegter Bildsequenzen während der Bewegung des Fahrzeugs. Die zusätzliche Anzeigeeinrichtung 1650, deren Inhalt nur der Beifahrer wahrnehmen kann, wird hingegen gar nicht durch den Blockierzustand oder Sperrmaßnahmen beeinflusst.

Es versteht sich für den Fachmann, dass hier nur beispielhafte Ausführungsformen beschrieben sind. Es sind Ausführungsformen denkbar, die keine, nur eine Zustandsmaschine oder mehr als zwei Zustandsmaschinen aufweisen. Diese sind jedoch immer zusätzlich zu den durch jede Nutzerinteraktion mit der mindestens einen Bedieneinrichtung verursachten Erhöhungen des aktuellen Involvierungswerts für dessen weitere zusätzliche Beeinflussung vorgesehen.

### Bezugszeichenliste

- 1: Fahrzeug
- 2: Fahrzeugcockpit
- 4: Windschutzscheibe
- 5: Mittelkonsole
- 6: Rand
- 10: Fahrersitz
- 11: Beifahrersitz
- 15: Rückfahrkammera
- 20: Lenkrad
- 30: Betätigungselement
- 31: Finger
- 50: Straße
- 100: Vorrichtung zum Sperren mindestens einer Bedieneinrichtung
- 200: Bedieneinrichtung
- 210: Touchscreen
- 211: Anzeige
- 212: Positionserfassungseinheit
- 300: Auswerteeinrichtung
- 310: Prozessor
- 320: Speicher
- 321: Programmspeicher
- 325: Parameterspeicher
- 326: Unterbrechungsschwellenwert
- 327: Freigabeschwellenwert
- 328: Warnschwellenwert
- 329: weitere Warnschwellenwert
- 330: Pfeil nach oben
- 331: Pfeil nach unten
- 335: Warnbereich
- 336: weitere Warnbereich
- 340: Belastungszustand
- 341: niedriger Belastungszustand
- 342: mittlerer/normaler Belastungszustand
- 343: hoher Belastungszustand
- 380: Striktheitsmodul
- 390: Warneinrichtung
- 400: Ausgabeeinrichtung
- 411: Anzeigeeinrichtung
- 420: Beleuchtungseinrichtung
- 421: Leuchtmittel
- 430: Audiosystem
- 440: haptische Rückkopplungseinheit
- 500: Beifahrer Anzeige
- 600: Kombiinstrumentenanzeige
- 700: Belastungsmanagementsystem
- 720: Assistenzsysteme
- 721: Spurhalteassistent
- 722: Fahrstabilitätsassistent (ESP)
- 723: Navigationssystem
- 724: Geschwindigkeitsregelanlage
- 725: weitere Assistenzsysteme
- 730: Fahrerzustandsüberwachungssystem
- 740: andere Fahrzeugsteuergeräte
- 1000: Balkendiagramm
- 1010: aktueller Involvierungswert
- 1020: Balken
- 1210: erste Berührposition
- 1220: Nahbereich (1. Berührposition)
- 1230: zweiten Berührposition
- 1240: Nahbereich (2. Berührposition)
- 1250: stilisierte Fahrbahn
- 1251: stilisiertes Auge
- 1252: Text
- 1260: vorausgehende Betätigungsbeginnposition (6. Nutzerinteraktion)
- 1270: Nahbereich (6. Nutzerinteraktion)
- 1280: Betätigungsbeginnposition (7. Betätigung)
- 1290: Nahbereich (7. Betätigung)
- 1300: Zustandsmaschine
- 1310: unbedienten Zustand
- 1320: internen Betätigungszustand
- 1330: normaler Involvierungszustand
- 1340: erhöhter Involvierungszustand
- 1400: weitere Zustandsmaschine
- 1410: unbedienten Zustand
- 1420: internen Betätigungszustand
- 1430: normaler Involvierungszustand
- 1440: erhöhter Involvierungszustand
- 1500: Nutzerinteraktion
- 1600: vorderer Bereich
- 1601: Fahrerseite
- 1602: Beifahrerseite
- 1610: Betätigungsbereich
- 1615: weiterer Betätigungsbereich
- 1620: Anzeige- und Bedieneinrichtung
- 1630: weitere Anzeige- und Bedieneinrichtung
- 1640: weitere Anzeigeeinrichtung
- 1650: weitere zusätzliche Anzeigeeinrichtung
- t1-t7: Zeitpunkte

## Patentansprüche

1. Vorrichtung (100) für ein Fahrzeug zum Sperren von Anzeige- und/oder Bedienkontexten umfassend:
mindestens eine Bedieneinrichtung (200) zum Erfassen von haptischen Nutzerinteraktionen und
eine Auswerteeinrichtung (300), welche ausgebildet ist, zumindest anhand der erfassten Nutzerinteraktionen einen aktuellen Involvierungswert (1010) zu ermitteln,
wobei
die Auswerteeinrichtung (300) ausgebildet ist, den aktuellen Involvierungswert (1010) mit mindestens einem Unterbrechungsschwellenwert (326) zu vergleichen und einen Blockierzustand festzustellen, wenn der aktuelle Involvierungswert (1010) den mindestens einen Unterbrechungsschwellenwert (326) erreicht, und die Auswerteeinrichtung (300) zumindest einen Bedienkontext der mindestens einen Bedieneinrichtung (200) sperrt oder zumindest einschränkt, wobei der aktuelle Involvierungswert (1010) bei jeder erfassten haptischen Nutzerinteraktion erhöht wird, sofern der aktuelle Involvierungswert (1010) den mindestens einen Unterbrechungsschwellenwert (326) nicht erreicht oder überschritten hat, wobei die Auswerteeinrichtung (300) ausgebildet ist, den aktuellen Involvierungswert (1010) zeitkontinuierlich oder in Zeitschritten um einen Erholungswert zu erniedrigen, **dadurch gekennzeichnet, dass** die mindestens eine Bedieneinrichtung (200) ausgebildet ist, die Benutzerinteraktion positionsaufgelöst und zeitaufgelöst zu erfassen, und die Auswerteeinrichtung (300) ausgebildet ist, den aktuellen Involvierungswert (1010) abhängig vom räumlichen Abstand der Positionen und einem zeitlichen Abstand jeweils aufeinander folgender Betätigungsbeginne zu erhöhen, wobei die Auswerteeinrichtung (300) ausgebildet ist, den aktuellen Involvierungswert (1010) bei jedem Erfassen eines Betätigungsbeginns um einen konstanten Distanzbetätigungswert zu erhöhen, wenn der räumliche Abstand der Position, an der der Betätigungsbeginn der Nutzerinteraktion erfasst ist, von der Position, an der der Betätigungsbeginn der zeitlich vorausgehend erfassten Nutzerinteraktion erfasst ist, einen Nahbereichsschwellenwert erreicht oder überschreitet oder eine Zeitspanne zwischen dem Erfassen des Betätigungsbeginns und dem Erfassen zeitlich vorausgehenden Betätigungsbeginns eine Lokalbetätigungszeitspanne erreicht oder überschreitet, und den aktuellen Involvierungswert (1010) bei jedem erfassten Betätigungsbeginn um einen konstanten Lokalbetätigungswert zu erhöhen, wenn der räumliche Abstand der Position, an der der Betätigungsbeginn der Nutzerinteraktion erfasst ist, von der Position, an der der Betätigungsbeginn der zeitlich vorausgehend Nutzerinteraktion erfasst ist, einen Nahbereichsschwellenwert unterschreitet und zusätzlich eine Zeitspanne zwischen dem Erfassen des Betätigungsbeginns und dem Erfassen zeitlich vorausgehenden Betätigungsbeginns eine Lokalbetätigungszeitspanne unterschreitet, wobei der Lokalbetätigungswert betragsmäßig kleiner als der Distanzbetätigungswert ist.

2. Vorrichtung (100) nach Anspruch 1, **dadurch gekennzeichnet, dass** die Auswerteeinrichtung (300) ausgebildet ist, beim Erfassen eines Betätigungsendes einer Nutzerinteraktion den aktuellen Involvierungswert (1010) um einen Betätigungsdauerinvolvierungswert zu erhöhen, wenn eine Betätigungsdauer der Nutzerinteraktion eine Kurzeitbetätigungszeitspanne den erreicht oder überschritten hat.

3. Vorrichtung (100) nach Anspruch 2, **dadurch gekennzeichnet, dass** der Betätigungsdauerinvolvierungswert variable ist und einem Minimum von einer Differenz der Betätigungsdauer und der Kurzeitbetätigungszeitspanne und einem Betätigungsdauerinvolvierungsmaximalwert ist.

4. Vorrichtung (100) nach einem der vorangehenden Ansprüche, **dadurch gekennzeichnet, dass** die Auswerteeinrichtung (300) ausgebildet ist, den Blockierzustand zu beenden, wenn der aktuelle Involvierungswert (1010) einen Freigabeschwellenwert (327) unterschreitet.

5. Vorrichtung (100) nach einem der vorangehenden Ansprüche, **dadurch gekennzeichnet, dass** die Auswerteeinrichtung (300) mindestens eine Zustandsmaschine aufweist, eine Interaktionsabfolge der Nutzerinteraktionen auswertet und ausgebildet ist, anhand der Auswertung der Nutzerinteraktionsabfolge einen gesteigerten Interaktionsinvolvierungszustand oder einen normalen Involvierungszustand zu erkennen, wobei die Auswerteeinrichtung (300) ausgebildet ist, den aktuellen Involvierungswert (1010) auf den Unterbrechungsschwellenwert (326) zu setzen, wenn der gesteigerte Involvierungszustand erkannt ist.

6. Vorrichtung (100) nach Anspruch 5, **dadurch gekennzeichnet, dass** der mindestens einen Zustandsmaschine eine Interaktionsüberwachungszeitspanne und eine Interaktionsintervallzeitspanne zugeordnet ist, und beim Erkennen einer Nutzerinteraktionsabfolge in den gesteigerten Involvierungszustand wechselt, die eine Gruppe zeitlich aufeinander folgender erfasster Betätigungsbeginne, bei denen die Zeitabstände zwischen den unmittelbar aufeinanderfolgend erfassten Betätigungsbeginnen der Gruppe alle kürzer als oder gleich der Interaktionsintervallzeitspanne sind, und zugleich diese Betätigungsbeginne der Gruppe in der Nutzerinteraktionsabfolge einen Zeitraum überspannen, der größer oder gleich der Interaktionsüberwachungszeitspane ist.

7. Vorrichtung (100) nach Anspruch 6, **dadurch gekennzeichnet, dass** die Auswerteeinrichtung (300) zusätzlich zu der mindestens einen Zustandsmaschine mindestens eine weitere Zustandsmaschine umfasst, die die Nutzerinteraktionsabfolge auswertet und die ausgebildet ist, ebenfalls einen gesteigerten Interaktionsinvolvierungszustand oder einen normalen Involvierungszustand zu erkennen, und die Auswerteeinrichtung (300) den aktuellen Involvierungswert (1010) auf den Unterbrechungsschwellenwert (326) setzt, wenn die mindesten eine weitere Zustandsmaschine in den gesteigerten Involvierungszustand wechselt, wobei der mindestens einen weiteren Zustandsmaschine eine weitere Interaktionsüberwachungszeitspanne und eine weitere Interaktionsintervallzeitspanne zugeordnet ist, und beim Erkennen einer Nutzerinteraktionsabfolge in den gesteigerten Involvierungszustand wechselt, die eine weitere Gruppe zeitlich aufeinander folgender erfasster Betätigungsbeginne, bei denen die Zeitabstände zwischen den unmittelbar aufeinanderfolgend erfassten Betätigungsbeginnen der weiteren Gruppe alle kürzer als (oder gleich) der weiteren Interaktionsintervallzeitspanne sind, und zugleich diese Betätigungsbeginne der weiteren Gruppe in der Nutzerinteraktionsabfolge einen Zeitraum überspannen, der größer oder gleich der weiteren Interaktionsüberwachungszeitspane ist.

8. Vorrichtung (100) nach einem der vorangehenden Ansprüche, dass die Auswerteeinrichtung (300) ausgebildet ist, Belastungsinformationen zu empfangen und anhand der Belastungsinformationen den Unterbrechungsschwellenwert (326) dynamisch anzupassen.

9. Vorrichtung (100) nach Anspruch 8, **dadurch gekennzeichnet, dass** die Auswerteeinrichtung (300) ausgebildet ist, den Freigabeschwellenwert (327) dynamisch abhängig von den Belastungsinformation anzupassen.

10. Vorrichtung (100) nach einem der vorangehenden Ansprüche, dass die Auswerteeinrichtung (300) ausgebildet ist, mit mindestens einer Ausgabeeinrichtung (400) gekoppelt ist, um eine ohne Blickabwendung vom Straßenverkehr wahrnehmbare Blockierinformation über den bestehenden Blockierzustand auszugeben.

11. Vorrichtung (100) nach Anspruch 10, **dadurch gekennzeichnet, dass** die Ausgabeeinrichtung eine Beleuchtungseinrichtung (420) mit einer Vielzahl von Leuchtmitteln (421) umfasst, wobei die Vielzahl von Leuchtmitteln (421) am Rand einer Windschutzscheibe im peripheren Sichtfeld des Fahrers angeordnet ist oder anordenbar ist.

12. Vorrichtung (100) nach einem der vorangehenden Ansprüche, dass die Auswerteeinrichtung (300) eine Warneinrichtung (390) umfasst, eine Warnung über einen Bevorstehenden Blockierzustand über die mindesten eine Ausgabeeinrichtung (400) und/oder die Bedieneinrichtung (200) und/oder eine Anzeigeeinrichtung ausgibt, wenn der aktuelle Involvierungswert (1010) mindestens einen Warnschwellenwert (328) unterschreite oder erreicht.

13. Verfahren zum Sperren von Anzeige- und/oder Bedienkontexten in einem Fahrzeug (1) umfassend
Erfassen von haptischen Nutzerinteraktionen mittels mindestens einer Bedieneinrichtung (200) und
Ermitteln eines aktuellen Involvierungswert (1010) zumindest anhand der erfassten Nutzerinteraktionen,
wobei
der aktuelle Involvierungswert (1010) mit mindestens einem Unterbrechungsschwellenwert (326) verglichen wird und ein Blockierzustand festgestellt wird, wenn der aktuelle Involvierungswert (1010) den mindestens einen Unterbrechungsschwellenwert (326) erreicht oder über schritten hat, und zumindest ein Bedienkontext der mindestens einen Bedieneinrichtung (200) für eine weitere Bedienung gesperrt oder zumindest einschränkt wird, wobei der aktuelle Involvierungswert (1010) bei jeder erfassten haptischen Nutzerinteraktion erhöht wird, sofern der aktuelle Involvierungswert (1010) den mindestens einen Unterbrechungsschwellenwert (326) nicht erreicht oder überschrittet, und der aktuelle Involvierungswert (1010) zeitkontinuierlich oder in Zeitschritten um einen Erholungswert erniedrigt wird, **dadurch gekennzeichnet, dass** der aktuelle Involvierungswert (1010) bei jedem Erfassen eines Betätigungsbeginns um einen konstanten Distanzbetätigungswert erhöht wird, wenn der räumliche Abstand der Position, an der der Betätigungsbeginn der Nutzerinteraktion erfasst ist, von der Position, an der der Betätigungsbeginn der zeitlich vorausgehend erfassten Nutzerinteraktion erfasst ist, einen Nahbereichsschwellenwert erreicht oder überschreitet oder eine Zeitspanne zwischen dem Erfassen des Betätigungsbeginns und dem Erfassen zeitlich vorausgehenden Betätigungsbeginns eine Lokalbetätigungszeitspanne erreicht oder überschreitet, und der aktuelle Involvierungswert (1010) bei jedem erfassten Betätigungsbeginn um einen konstanten Lokalbetätigungswert erhöht wird, wenn der räumliche Abstand der Position, an der der Betätigungsbeginn der Nutzerinteraktion erfasst ist, von der Position, an der der Betätigungsbeginn der zeitlich vorausgehend Nutzerinteraktion erfasst ist, einen Nahbereichsschwellenwert unterschreitet und zusätzlich eine Zeitspanne zwischen dem Erfassen des Betätigungsbeginns und dem Erfassen zeitlich vorausgehenden Betätigungsbeginns eine Lokalbetätigungszeitspanne unterschreitet, wobei der Lokalbetätigungswert betragsmäßig kleiner als der Distanzbetätigungswert ist.

## Claims

1. Apparatus (100) for a vehicle for blocking display contexts and/or operating contexts, comprising:
at least one operating device (200) for detecting haptic user interactions and
an evaluation device (300) which is designed to determine a current involvement value (1010) at least on the basis of the detected user interactions,
the evaluation device (300) being designed to compare the current involvement value (1010) with at least one interruption threshold value (326) and to establish a blocking state when the current involvement value (1010) reaches the at least one interruption threshold value (326), and the evaluation device (300) blocking or at least restricting at least one operating context of the at least one operating device (200), the current involvement value (1010) being increased for each detected haptic user interaction, provided that the current involvement value (1010) has not reached or exceeded the at least one interruption threshold value (326),
the evaluation device (300) being designed to lower the current involvement value (1010) by a recovery value continuously in time or in time increments, **characterized in that** the at least one operating device (200) is designed to detect the user interaction in a position-resolved and time-resolved manner, and the evaluation device (300) is designed to increase the current involvement value (1010) depending on the spatial distance of the positions and on a temporal distance between successive actuation beginnings, the evaluation device (300) being designed to increase the current involvement value (1010) by a constant remote actuation value each time an actuation beginning is detected if the spatial distance between the position at which the actuation beginning of the user interaction is detected and the position at which the actuation beginning of the temporally preceding detected user interaction is detected reaches or exceeds a close-range threshold value or if a time period between detecting the actuation beginning and detecting the temporally preceding actuation beginning reaches or exceeds a local actuation time period, and the evaluation device being designed to increase the current involvement value (1010) by a constant local actuation value each time an actuation beginning is detected if the spatial distance between the position at which the actuation beginning of the user interaction is detected and the position at which the actuation beginning of the temporally preceding user interaction is detected falls below a close-range threshold value and, in addition, a time period between detecting the actuation beginning and detecting the temporally preceding actuation beginning is less than a local actuation time period, the local actuation value being smaller in magnitude than the remote actuation value.

2. Apparatus (100) according to claim 1, **characterized in that** the evaluation device (300) is designed to increase the current involvement value (1010) by an actuation duration involvement value, when an actuation end of a user interaction is detected, if an actuation duration of the user interaction has reached or exceeded a short-term actuation time period.

3. Apparatus (100) according to claim 2, **characterized in that** the actuation duration involvement value is variable and is a minimum of a difference between the actuation duration and the short-term actuation time period, and an actuation duration involvement maximum value.

4. Apparatus (100) according to any of the preceding claims,
**characterized in that** the evaluation device (300) is designed to end the blocking state when the current involvement value (1010) falls below a release threshold value (327).

5. Apparatus (100) according to any of the preceding claims,
**characterized in that** the evaluation device (300) has at least one state machine, evaluates an interaction sequence of the user interactions, and is designed to recognize an increased interaction involvement state or a normal involvement state on the basis of the evaluation of the user interaction sequence, the evaluation device (300) being designed to set the current involvement value (1010) to the interruption threshold value (326) when the increased involvement state is recognized.

6. Apparatus (100) according to claim 5, **characterized in that** the at least one state machine is assigned an interaction monitoring time period and an interaction interval time period, and, upon recognition of a user interaction sequence, switches to the increased involvement state, which sequence a group of temporally successively detected actuation beginnings in which group the time intervals between the immediately successively detected actuation beginnings in the group are all shorter than or equal to the interaction interval time period, and at the same time these actuation beginnings in the group in the user interaction sequence span a period greater than or equal to the interaction monitoring time period.

7. Apparatus (100) according to claim 6, **characterized in that** the evaluation device (300) comprises, in addition to the at least one state machine, at least one further state machine which evaluates the user interaction sequence and which is designed to also recognize an increased interaction involvement state or a normal involvement state, and the evaluation device (300) sets the current involvement value (1010) to the interruption threshold value (326) when the at least one further state machine switches to the increased involvement state, the at least one further state machine being assigned a further interaction monitoring time period and a further interaction interval time period, and, upon recognition of a user interaction sequence, switches to the increased involvement state, which sequence a further group of temporally successively detected actuation beginnings, in which group the time intervals between the immediately successively detected actuation beginnings in the further group are all shorter than (or equal to) the further interaction interval time period, and at the same time these actuation beginnings in the further group in the user interaction sequence span a period greater than or equal to the further interaction monitoring time period.

8. Apparatus (100) according to any of the preceding claims, that the evaluation device (300) is designed to receive load information and to dynamically adjust the interruption threshold value (326) on the basis of the load information.

9. Apparatus (100) according to claim 8, **characterized in that** the evaluation device (300) is designed to dynamically adjust the release threshold value (327) depending on the load information.

10. Apparatus (100) according to any of the preceding claims, that the evaluation device (300) is designed, is coupled to at least one output device (400) in order to output blocking information about the existing blocking state, which information can be perceived without looking away from the road traffic.

11. Apparatus (100) according to claim 10, **characterized in that** the output device comprises an illumination device (420) which has a plurality of lamps (421), the plurality of lamps (421) being arranged or being arrangeable on the edge of a windshield in the driver's peripheral field of vision.

12. Apparatus (100) according to any of the preceding claims, that the evaluation device (300) comprises a warning device (390), outputs a warning about an impending blocking state via the at least one output device (400) and/or the operating device (200) and/or a display device if the current involvement value (1010) falls below or reaches at least one warning threshold value (328).

13. Method for blocking display contexts and/or operating contexts in a vehicle (1), comprising:
detecting haptic user interactions by means of at least one operating device (200) and
determining a current involvement value (1010) at least on the basis of the detected user interactions,
the current involvement value (1010) being compared with at least one interruption threshold value (326) and a blocking state being established if the current involvement value (1010) has reached or exceeded the at least one interruption threshold value (326), and at least one operating context of the at least one operating device (200) being blocked or at least restricted for a further operation, the current involvement value (1010) being increased for each detected haptic user interaction, provided that the current involvement value (1010) does not reach or exceed the at least one interruption threshold value (326),
and the current involvement value (1010) being lowered by a recovery value continuously in time or in time increments, **characterized in that** the current involvement value (1010) is increased by a constant remote actuation value each time an actuation beginning is detected if the spatial distance between the position at which the actuation beginning of the user interaction is detected and the position at which the actuation beginning of the temporally preceding detected user interaction is detected reaches or exceeds a close-range threshold value or if a time period between detecting the actuation beginning and detecting the temporally preceding actuation beginning reaches or exceeds a local actuation time period, and the current involvement value (1010) is increased by a constant local actuation value each time an actuation beginning is detected if the spatial distance between the position at which the actuation beginning of the user interaction is detected and the position at which the actuation beginning of the temporally preceding user interaction is detected falls below a close-range threshold value and, in addition, a time period between detecting the actuation beginning and detecting the temporally preceding actuation beginning is less than a local actuation time period, the local actuation value being smaller in magnitude than the remote actuation value.

## Revendications

1. Dispositif (100) pour un véhicule permettant le verrouillage de contextes d'affichage et/ou de commande, comprenant :
au moins un appareil de commande (200) pour la détection d'interactions utilisateur haptiques et
un appareil d'évaluation (300) configuré pour déterminer une valeur d'implication actuelle (1010) au moins à l'aide des interactions utilisateur détectées, dans lequel
l'appareil d'évaluation (300) est configuré pour comparer la valeur d'implication actuelle (1010) avec au moins une valeur seuil d'interruption (326) et pour constater un état de blocage lorsque la valeur d'implication actuelle (1010) atteint l'au moins une valeur seuil d'interruption (326), et l'appareil d'évaluation (300) verrouille ou au moins limite au moins un contexte de commande de l'au moins un appareil de commande (200), dans lequel la valeur d'implication actuelle (1010) est augmentée à chaque interaction utilisateur haptique détectée, pour autant que la valeur d'implication actuelle (1010) n'a pas atteint ou dépassé l'au moins une valeur seuil d'interruption (326),
dans lequel l'appareil d'évaluation (300) est configuré pour diminuer la valeur d'implication actuelle (1010) d'une valeur de récupération de manière continue dans le temps ou dans des intervalles de temps, **caractérisé en ce que** l'au moins un appareil de commande (200) est configuré pour détecter l'interaction utilisateur avec une résolution de position et une résolution temporelle, et l'appareil d'évaluation (300) est configuré pour augmenter la valeur d'implication actuelle (1010) en fonction d'un écart spatial entre les positions et un écart temporel entre des débuts d'actionnement se suivant respectivement les uns les autres, dans lequel l'appareil d'évaluation (300) est configuré pour augmenter la valeur d'implication actuelle (1010) d'une valeur d'actionnement à distance constante à chaque détection d'un début d'actionnement lorsque l'écart spatial entre la position dans laquelle le début d'actionnement de l'interaction utilisateur est détecté et la position dans laquelle le début d'actionnement de l'interaction utilisateur détectée précédemment dans le temps est détecté, atteint ou dépasse une valeur seuil de proximité, ou lorsqu'une période entre la détection du début d'actionnement et la détection du début d'actionnement précédemment dans le temps atteint ou dépasse une période d'actionnement local, et pour augmenter la valeur d'implication actuelle (1010) d'une valeur d'actionnement local constante à chaque début d'actionnement détecté lorsque l'écart spatial entre la position dans laquelle le début d'actionnement de l'interaction utilisateur est détecté et la position dans laquelle le début d'actionnement de l'interaction utilisateur précédemment dans le temps est détecté, n'atteint pas une valeur seuil de proximité et, en outre, lorsqu'une période entre la détection du début d'actionnement et la détection du début d'actionnement précédemment dans le temps n'atteint pas une période d'actionnement local, dans lequel la valeur d'actionnement local est inférieure en valeur absolue à la valeur d'actionnement à distance.

2. Dispositif (100) selon la revendication 1, **caractérisé en ce que** l'appareil d'évaluation (300) est configuré pour, lors de la détection d'une fin d'actionnement d'une interaction utilisateur, augmenter la valeur d'implication actuelle (1010) d'une valeur d'implication de durée d'actionnement lorsqu'une durée d'actionnement de l'interaction utilisateur a atteint ou dépassé une période d'actionnement de courte durée.

3. Dispositif (100) selon la revendication 2, **caractérisé en ce que** la valeur d'implication de durée d'actionnement est variable et est un minimum d'une différence entre la durée d'actionnement et la période d'actionnement de courte durée et une valeur maximale d'implication de durée d'actionnement.

4. Dispositif (100) selon l'une des revendications précédentes,
**caractérisé en ce que** l'appareil d'évaluation (300) est configuré pour mettre fin à l'état de blocage lorsque la valeur d'implication actuelle (1010) n'atteint pas une valeur seuil de libération (327).

5. Dispositif (100) selon l'une des revendications précédentes,
**caractérisé en ce que** l'appareil d'évaluation (300) présente au moins une machine d'état, évalue une séquence d'interaction des interactions utilisateur et est configuré pour reconnaître, à l'aide de l'évaluation de la séquence d'interaction utilisateur, un état d'implication d'interaction accru ou un état d'implication normal, dans lequel l'appareil d'évaluation (300) est configuré pour régler la valeur d'implication actuelle (1010) sur la valeur seuil d'interruption (326) lorsque l'état d'implication accru est reconnu.

6. Dispositif (100) selon la revendication 5, **caractérisé en ce qu'**une période de surveillance d'interaction et une période d'intervalle d'interaction sont associées à l'au moins une machine d'état, laquelle passe à l'état d'implication accru lors de la reconnaissance d'une séquence d'interaction utilisateur qui un groupe de débuts d'actionnement successifs périodiquement détectés, dans lesquels les écarts temporels entre les débuts d'actionnement immédiatement successifs détectés du groupe sont tous inférieurs ou égaux à la période d'intervalle d'interaction, et en même temps, lesdits débuts d'actionnement du groupe dans la séquence d'interaction utilisateur couvrent une durée supérieure ou égale à la période de surveillance d'interaction.

7. Dispositif (100) selon la revendication 6, **caractérisé en ce que** l'appareil d'évaluation (300) comprend, outre l'au moins une machine d'état, au moins une autre machine d'état qui évalue la séquence d'interaction utilisateur et qui est configurée pour reconnaître également un état d'implication d'interaction accru ou un état d'implication normal, et l'appareil d'évaluation (300) règle la valeur d'implication actuelle (1010) sur la valeur seuil d'interruption (326) lorsque l'au moins une autre machine d'état passe à l'état d'implication accru, dans lequel une autre période de surveillance d'interaction et une autre période d'intervalle d'interaction sont associées à l'au moins une autre machine d'état, laquelle passe à l'état d'implication accru lors de la reconnaissance d'une séquence d'interaction utilisateur qui un autre groupe de débuts d'actionnement successifs périodiquement détectés, dans lesquels les écarts temporels entre les débuts d'actionnement immédiatement successifs détectés de l'autre groupe sont tous inférieurs (ou égaux) à l'autre période d'intervalle d'interaction, et en même temps, lesdits débuts d'actionnement de l'autre groupe dans la séquence d'interaction utilisateur couvrent une durée supérieure ou égale à l'autre période de surveillance d'interaction.

8. Dispositif (100) selon l'une des revendications précédentes, en ce que l'appareil d'évaluation (300) est configuré pour recevoir des informations de charge et pour adapter de manière dynamique la valeur seuil d'interruption (326) à l'aide des informations de charge.

9. Dispositif (100) selon la revendication 8, **caractérisé en ce que** l'appareil d'évaluation (300) est configuré pour adapter de manière dynamique la valeur seuil de libération (327) à l'aide des informations de charge.

10. Dispositif (100) selon l'une des revendications précédentes, en ce que l'appareil d'évaluation (300) est configuré pour être couplé à au moins un appareil de sortie (400) afin de délivrer une information de blocage concernant l'état de blocage existant, perceptible sans détourner le regard de la circulation routière.

11. Dispositif (100) selon la revendication 10, **caractérisé en ce que** l'appareil de sortie comprend un appareil d'éclairage (420) comportant une pluralité de moyens d'éclairage (421), dans lequel la pluralité de moyens d'éclairage (421) est disposée ou peut être disposée sur le bord d'un pare-brise dans le champ de vision périphérique du conducteur.

12. Dispositif (100) selon l'une des revendications précédentes, en ce que l'appareil d'évaluation (300) comprend un appareil d'avertissement (390), émet un avertissement concernant un état de blocage imminent par l'intermédiaire de l'au moins un appareil de sortie (400) et/ou de l'appareil de commande (200) et/ou d'un appareil d'affichage, lorsque la valeur d'implication actuelle (1010) atteint au moins une valeur seuil d'avertissement (328) ou est inférieure à celle-ci.

13. Procédé permettant de bloquer des contextes d'affichage et/ou de commande dans un véhicule (1) comprenant
la détection d'interactions utilisateur haptiques au moyen d'au moins un appareil de commande (200), et
la détermination d'une valeur d'implication actuelle (1010) au moins à l'aide des interactions utilisateur détectées,
dans lequel
la valeur d'implication actuelle (1010) est comparée avec au moins une valeur seuil d'interruption (326) et un état de blocage est constaté lorsque la valeur d'implication actuelle (1010) a atteint ou dépassé l'au moins une valeur seuil d'interruption (326), et qu'au moins un contexte de commande de l'au moins un appareil de commande (200) est verrouillé ou au moins limité pour une autre commande, dans lequel la valeur d'implication actuelle (1010) est augmentée à chaque interaction utilisateur haptique détectée, pour autant que la valeur d'implication actuelle (1010) n'atteint pas ou ne dépasse pas l'au moins une valeur seuil d'interruption (326),
et la valeur d'implication actuelle (1010) est diminuée d'une valeur de récupération de manière continue dans le temps ou dans des intervalles de temps, **caractérisé en ce que** la valeur d'implication actuelle (1010) est augmentée d'une valeur d'actionnement à distance constante à chaque détection d'un début d'actionnement lorsque l'écart spatial entre la position dans laquelle le début d'actionnement de l'interaction utilisateur est détecté, et la position dans laquelle le début d'actionnement de l'interaction utilisateur détectée précédemment dans le temps est détecté, atteint ou dépasse une valeur seuil de proximité, ou lorsqu'une période entre la détection du début d'actionnement et la détection du début d'actionnement précédemment dans le temps atteint ou dépasse une période d'actionnement local, et la valeur d'implication actuelle (1010) est augmentée d'une valeur d'actionnement local constante à chaque début d'actionnement détecté lorsque l'écart spatial entre la position dans laquelle le début d'actionnement de l'interaction utilisateur est détecté et la position dans laquelle le début d'actionnement de l'interaction utilisateur précédemment dans le temps est détecté, n'atteint pas une valeur seuil de proximité et, en outre, lorsqu'une période entre la détection du début d'actionnement et la détection du début d'actionnement précédemment dans le temps n'atteint pas une période d'actionnement local, dans lequel la valeur d'actionnement local est inférieure en valeur absolue à la valeur d'actionnement à distance.
